# EUROPÄISCHE PATENTSCHRIFT

(11) **EP 3 452 734 B1**
(45) Veröffentlichungstag und Bekanntmachung des Hinweises auf die Patenterteilung: **25.09.2019**
(21) Anmeldenummer: 17837946.7
(22) Anmeldetag: 07.12.2017
(51) Int. Cl.: F16B 21/08

(54) **CLIP ZUM BEFESTIGEN EINES ERSTEN ELEMENTS AN EINEM ZWEITEN ELEMENT**
CLIP FOR SECURING A FIRST ELEMENT TO A SECOND ELEMENT
CLIP SERVANT À FIXER UN PREMIER ÉLÉMENT À UN DEUXIÈME ÉLÉMENT

(30) Priorität: 09.12.2016 DE 102016014628
(43) Veröffentlichungstag der Anmeldung: 13.03.2019
(73) Patentinhaber: A. Raymond et Cie. SCS, 38000 Grenoble (FR)
(72) Erfinder: MUTZ, Rainer, 79591 Eimeldingen (DE)
(74) Vertreter: Tilmann, Max Wilhelm
(86) Internationale Anmeldenummer: PCT/EP2017/081774
(87) Internationale Veröffentlichungsnummer: WO 2018/104421

(56) Entgegenhaltungen:
- EP-A1- 2 687 731
- WO-A1-2012/104250

## Beschreibung

Die Erfindung betrifft einen Clip zum Befestigen eines ersten Elements an einem zweiten Element. Ferner betrifft die Erfindung eine Vorrichtung mit einem ersten Element und einem an dem ersten Element befestigten zweiten Element, wobei das erste Element ein Loch aufweist und das zweite Element mittels eines Clips an dem ersten Element befestigt ist.

Aus WO 2012/104250 A1 ist ein Clip zum Befestigen eines ersten Elements an einem zweiten Element bekannt. Der Clip weist einen Kopf und eine Spitze auf. Der dort beschriebene Clip weist eine erste Seite (dort mit Außenflügel 13 beschrieben) und eine der ersten Seite gegenüberliegende zweite Seite auf. Die erste Seite erstreckt sich von dem Kopf bis hin zur Spitze, die unter anderem von den beiden Scheiteln der bogenförmigen Umbiegeabschnitte 15 gebildet wird, die am Ende der ersten Seite vorgesehen sind. Ebenso erstreckt sich die zweite Seite von dem Kopf in Richtung auf die Spitze, wobei die Spitze des Weiteren durch die beiden Scheitel von zwei am Ende der zweiten Seite vorgesehenen bogenförmigen Umbiegeabschnitten gebildet wird. Bei dem aus WO 2012/104250 A1 bekannten Clip erstreckt sich eine erste Seitenwand, die dort mit Randflügel 21 bezeichnet wird, von der ersten Seite (von dem Außenflügel 13) in Richtung auf die zweite Seite (in Richtung auf den dem einen Außenflügel 13 gegenüberliegenden Außenflügel 13). Ferner erstreckt sich eine zweite Seitenwand von der zweiten Seite in Richtung auf die erste Seite.

Aus EP 2 404 067 B1 ist ein Clip zum Befestigen eines ersten Elements an einem zweiten Element bekannt, wobei der Clip einen Kopf und eine Spitze aufweist. Bei dem aus EP 2 404 067 B1 bekannten Clip ist eine erste Seite vorgesehen, die sich von dem Kopf in Richtung auf die Spitze erstreckt, und eine zweite Seite, die sich von dem Kopf in Richtung auf die Spitze erstreckt. Eine erste Seitenwand erstreckt sich von der ersten Seite in Richtung auf die zweite Seite und eine zweite Seitenwand erstreckt sich von der zweiten Seite in Richtung auf die erste Seite.

Die EP 2 687 731 A1 betrifft eine Vorrichtung zum Befestigen eines Anbauteiles an einem Trägerteil mit Montagekontrolle mit einem in radialer Richtung verformbare Befestigungsarme aufweisenden Befestigungselement, mit denen durch Hintergriff eines Trägerteiles ein Anbauteil an dem Trägerteil befestigbar ist, und mit einem Anzeigeelement, das mit dem Befestigungselement derart zusammenwirkt, dass bei einer ordnungsgemäßen Befestigung des Anbauteiles an dem Trägerteil nach einem Montagevorgang ein definierter Montageanzeigezustand eingenommen ist, wobei das Anzeigeelement einen länglichen Drehschaft aufweist, der wenigstens abschnittsweise zwischen den Befestigungsarmen angeordnet und so ausgebildet ist, dass sich der Drehschaft während des Montagevorganges durch Einwirken wenigstens eines Befestigungsarmes auf den Drehschaft um seine Längsachse dreht.

Vor diesem Hintergrund lag der vorliegenden Erfindung die Aufgabe zugrunde, einen Clip zum Befestigen eines ersten Elements an einem zweiten Element vorzuschlagen, der insbesondere gegen eine Belastung des zwischen dem Kopf und der Spitze befindlichen Schafts widerstandsfähiger ist.

Diese Aufgabe wird durch den Gegenstand des Anspruchs 1 gelöst. Vorteilhafte Ausführungsformen sind in den Unteransprüchen und der hiernach folgenden Beschreibung wiedergegeben.

Die Erfindung geht von dem Grundgedanken aus, die beiden Seitenwände, bzw. die beiden Seiten, bzw. sich an die Spitze anschließende, zurückgeführte Bandabschnitte über einen Verschluss miteinander zu verbinden und dadurch Relativbewegungen dieser Elemente zueinander zumindest in eine Bewegungsrichtung zu verhindern. Dazu sieht die Erfindung einen in eine Rastrichtung vorspringenden Rastvorsprung, der eine entgegen der Rastrichtung gewandte Rastoberfläche aufweist, vor und eine Rastaufnahme, die eine Kante und eine sich an die Kante anschließende Gegenfläche aufweist, wobei der sich in Rastrichtung vorspringende Rastvorsprung über die Kante ragt, so dass die Rastoberfläche der Gegenfläche zugewandt ist. Die Erfindung hat erkannt, dass der Schaft des Clips auf diese Weise besonders steif bzw. stabil ausgebildet werden kann.

Unter einem "Clip" zum Befestigen eines ersten Elements an einem zweiten Element wird eine Befestigungsvorrichtung verstanden, die zumindest eine erste Kontaktfläche und zumindest eine zweite, der ersten Kontaktfläche zugewandte Kontaktfläche aufweist. Die erste Kontaktfläche ist in der Regel an einem feststehenden Element der Befestigungsvorrichtung vorgesehen, während die zweite Kontaktfläche auf einem federnden Element der Befestigungsvorrichtung vorgesehen ist. Derartige Befestigungsvorrichtungen sind dazu vorgesehen, mit einer Spitze in eine Ausnehmung, meist ein Loch, in dem ersten Element eingeführt zu werden. Dabei wird das die zweite Kontaktfläche tragende federnde Element während des Einschiebens eingedrückt, federt jedoch nach dem Passieren des Lochs wieder in seine Ausgangsstellung zurück. Das erste Element ist meist als flächiges Element, beispielsweise als Platte oder als Blech eines Teils eines Rahmens eines Fahrzeugs ausgebildet. Das erste Element kann jedoch auch ein Sackloch mit einer entsprechend gewählten Hinterschneidung aufweisen, die dem federnden Element das Ausfedern ermöglicht, nachdem es einen engeren Teil des Lochs oberhalb der Hinterschneidung passiert hat. Das zweite Element kann durch Klemmung an dem ersten Element befestigt werden, beispielsweise wenn es zwischen einem Kopf des Clips und einer Oberfläche des ersten Elements geschoben wird und der Abstand der ersten Kontaktfläche, die dann am Kopf des Clips vorgesehen ist, und der zweiten Kontaktfläche des Clips so gewählt ist, dass sie bei einer bestimmten Materialstärke des ersten Elements und einer bestimmten Materialstärke des zweiten Elements eine solche Klemmung erzeugen kann. Ebenso ist es denkbar, dass das zweite Element ebenfalls ein Loch aufweist und der Clip mit seiner Spitze durch beide Löcher geführt wird. Ebenso ist es denkbar, dass das zweite Element an einem Kopf des Clips befestigt wird, wenn dieser beispielsweise einen Haken oder einen Befestigungspilz aufweist oder wenn das zweite Element schlichtweg mit dem Kopf des Clips verklebt, verschweißt oder in anderer Weise fügend verbunden wird.

Unter einem Kopf eines solchen Clips wird eine an einem Ende des Clips vorgesehene Verbreiterung verstanden. Der Kopf ist in der Regel dafür vorgesehen, um zu verhindern, dass der Clip gänzlich durch ein Loch des ersten Elements geschoben werden kann. Häufig ist der Kopf auch dafür ausgebildet, um die für das Einschieben des Clips in ein Loch des ersten Elements aufzubringende Kraft auf den Clip applizieren zu können. Hierzu weist der Clip häufig eine der Spitze abgewandte flache Oberfläche auf. In einer bevorzugten Ausführungsform ist der Kopf starr ausgebildet, wobei unter "starr" verstanden wird, dass kein Abschnitt des Kopfes relativ zu einem anderen Kopf beweglich, beispielsweise federnd ausgebildet ist. In einer alternativen Ausführungsform weist der Kopf einen starren Grundkörper auf, an dem zum Kopf zugehörige federnde Elemente, beispielsweise federnde Arme oder schirmartige Dichtlippen vorgesehen sind. In einer bevorzugten Ausführungsform ist die größte Querschnittsfläche aller Querschnittsflächen des Kopfs in Ebenen senkrecht zur Längsachse des Clips größer als die größte Querschnittsfläche aller Querschnittsflächen des Schafts in Ebenen senkrecht zur Längsachse des Clips.

Der Clip weist ferner eine Spitze auf. Mit "Spitze" wird im Kontext dieser Beschreibung lediglich dass dem Kopf gegenüberliegende Ende des Clips bezeichnet. Zwar ist es in einer bevorzugten Ausführungsform vorgesehen, dass ein sich von dem Kopf in Richtung auf die Spitze erstreckender Schaft des Clips zur Spitze hin verjüngt. Dies ist aber nicht zwingend notwendig. Als Spitze im Kontext dieser Beschreibung wird auch ein in einer denkbaren Ausführungsform vorzusehendes stumpfes Ende an dem dem Kopf gegenüberliegenden Ende eines Schafts verstanden. In einer bevorzugten Ausführungsform kann die Spitze pyramidenförmig oder kegelförmig oder pyramidenstumpfförmig oder kegelstumpfförmig zulaufen. Ebenso kann die Spitze durch den First eines dachförmigen Endabschnitts eines sich von dem Kopf zur Spitze hin erstreckenden Schafts ausgebildet werden. Dies ist aber nicht zwingend notwendig. Die Spitze kann durch einen einzigen Abschnitt des Clips gebildet werden. In einer bevorzugten Ausführungsform wird die Spitze jedoch aus mehreren Teilabschnitten des Clips gebildet, beispielsweise durch die vier Scheitel der bogenförmigen Umbiegeabschnitte 15, wie sie in der WO 2012/104250 A2 gezeigt werden oder die beiden Scheitel der Bogenabschnitte der in Fig. 1, 2, 7, 8, 9, 10 der EP 2 404 067 B1 dargestellten Ausführungsformen.

Zwischen dem Kopf und der Spitze weist der Clip einen, ggf. aus mehreren Teilen zusammengesetzten Schaft auf. Der Clip weist eine Längsachse auf, die sich vom Kopf zur Spitze erstreckt. Insbesondere bevorzugt ist der Schaft in seiner vom Kopf zur Spitze weisenden Längserstreckung länger, als in einer senkrecht zur Längserstreckung weisenden Breitenrichtung. Insbesondere bevorzugt weist die Längsachse des Clips in Richtung der Längserstreckung des Schafts. In einer bevorzugten Ausführungsform ist der Clip bezüglich einer Ebene, die die Längsachse des Clips enthält, spiegelsymmetrisch ausgeführt. In einer alternativen Ausführungsform ist der Clip in der Weise rotationssymmetrisch ausgeführt, dass es zumindest eine Ebene gibt, die die Längsachse des Clips enthält, bei der jeder Abschnitt des Clips, der sich auf einer Seite dieser Ebene befindet, durch eine Drehung um 180° um die Längsachse in Deckung mit einem identisch ausgebildeten Abschnitt des Clips auf der anderen Seite dieser Ebene gebracht werden kann.

Der Clip weist eine erste Seite auf, die sich von dem Kopf in Richtung auf die Spitze erstreckt. Der Clip weist einen, ggf. auch aus mehreren Elementen des Clips gebildeten Schaft auf. Dieser Schaft weist eine erste Seite auf, die sich von dem Kopf in Richtung auf die Spitze erstreckt. Ebenso weist dieser Schaft eine zweite Seite auf, die sich von dem Kopf in Richtung auf die Spitze erstreckt. In einer besonders bevorzugten Ausführungsform erstreckt sich die erste Seite von dem Kopf bis zu der Spitze, wobei sich an dem spitzenseitigen Ende der ersten Seite Abschnitte des Clips anschließen, die zur Bildung der Spitze beitragen. In einer besonders bevorzugten Ausführungsform erstreckt sich die zweite Seite von dem Kopf bis zu der Spitze, wobei sich an dem spitzenseitigen Ende der zweiten Seite Abschnitte des Clips anschließen, die zur Bildung der Spitze beitragen. Es sind aber auch Bauformen denkbar, bei denen der Schaft des Clips zwar ausgehend vom Kopf mit einer ersten Seite und einer zweiten Seite beginnt, die sich jeweils in Richtung auf dem Kopf erstrecken, dann aber zwischen der ersten Seite und den die Spitze bildenden Abschnitten des Clips andere, insbesondere im Verhältnis zu der Erstreckung der ersten Seite in andere Richtungen weisende Abschnitte des Clips vorgesehen sind, und/oder dann aber zwischen der zweiten Seite und den die Spitze bildenden Abschnitten des Clips andere, insbesondere im Verhältnis zu der Erstreckung der zweiten Seite in andere Richtungen weisende Abschnitte des Clips vorgesehen sind.

In einer bevorzugten Ausführungsform sind die erste Seitenwand und die zweite Seitenwand fluchtend ausgerichtet. Unter fluchtend wird insbesondere bevorzugt verstanden, dass die erste Seitenwand eine nach außen weisende Oberfläche aufweist und die zweite Seitenwand eine nach außen weisende Oberfläche aufweist und dass die nach außen weisende Oberfläche der ersten Seitenwand und die nach außen weisende Oberfläche der zweiten Seitenwand in einer Ebene angeordnet sind. In einer bevorzugten Ausführungsform sind die erste Seitenwand und die zweite Seitenwand auf derselben Seite einer Ebene angeordnet, die die Längsachse des Clips enthält.

Der erfindungsgemäße Clip weist eine erste Seitenwand auf, die sich von der ersten Seite in Richtung auf die zweite Seite erstreckt. In einer besonders bevorzugten Ausführungsform weist der Clip eine dritte Seitenwand auf, die sich ebenfalls von der ersten Seite in Richtung auf die zweite Seite erstreckt, wobei sich die erste Seitenwand von einem ersten Rand der ersten Seite in Richtung auf die zweite Seite erstreckt und die dritte Seitenwand sich von einem dem ersten Rand gegenüberliegenden zweiten Rand der ersten Seite in Richtung auf die zweite Seite erstreckt. In einer besonders bevorzugten Ausführungsform weist der Clip eine vierte Seitenwand auf, die sich ebenfalls von der zweiten Seite in Richtung auf die erste Seite erstreckt, wobei sich die zweite Seitenwand von einem ersten Rand der zweiten Seite in Richtung auf die erste Seite erstreckt und die vierte Seitenwand sich von einem dem ersten Rand gegenüberliegenden zweiten Rand der zweiten Seite in Richtung auf die erste Seite erstreckt. In einer bevorzugten Ausführungsform sind die dritte Seitenwand und die vierte Seitenwand fluchtend ausgerichtet. Unter fluchtend wird insbesondere bevorzugt verstanden, dass die dritte Seitenwand eine nach außen weisende Oberfläche aufweist und die vierte Seitenwand eine nach außen weisende Oberfläche aufweist und dass die nach außen weisende Oberfläche der dritten Seitenwand und die nach außen weisende Oberfläche der vierte Seitenwand in einer Ebene angeordnet sind. In einer bevorzugten Ausführungsform ist die erste Seitenwand parallel zur dritten Seitenwand ausgeführt und/oder die zweite Seitenwand parallel zur vierten Seitenwand ausgeführt

Wie vorstehend ausgeführt, kann der Clip spiegelsymmetrisch bezüglich einer Ebene ausgeführt sein, die die Längsachse des Clips enthält. In einer solchen Ausführungsform ist die dritte Seitenwand so ausgeführt, wie die erste Seitenwand, und die vierte Seitenwand so ausgeführt, wie die zweite Seitenwand, so dass die nachfolgenden Erläuterungen von Merkmalen der ersten Seitenwand auch Erläuterungen von Merkmalen der dritten Seitenwand sind und die nachfolgenden Erläuterungen von Merkmalen der zweiten Seitenwand auch Erläuterungen von Merkmalen der vierten Seitenwand sind. Wie vorstehend ausgeführt, kann der Clip aber auch in der Weise rotationssymmetrisch ausgeführt sein, dass es zumindest eine Ebene gibt, die die Längsachse des Clips enthält, bei der jeder Abschnitt des Clips, der sich auf einer Seite dieser Ebene befindet, durch eine Drehung um 180° um die Längsachse in Deckung mit einem identisch ausgebildeten Abschnitt des Clips auf der anderen Seite dieser Ebene gebracht werden kann. In einer solchen Ausführungsform ist die dritte Seitenwand so ausgeführt, wie die zweite Seitenwand, und die vierte Seitenwand so ausgeführt, wie die erste Seitenwand, so dass die nachfolgenden Erläuterungen von Merkmalen der ersten Seitenwand auch Erläuterungen von Merkmalen der vierten Seitenwand sind und die nachfolgenden Erläuterungen von Merkmalen der zweiten Seitenwand auch Erläuterungen von Merkmalen der dritten Seitenwand sind.

In der Beschreibung wird als Inneres des Clips der unmittelbare Bereich um die Längsachse des Clips verstanden und/oder der von der ersten Seite, der zweiten Seite und der ersten Seitenwand und der zweiten Seitenwand und - soweit vorhanden - der von der dritten Seitenwand und der vierten Seitenwand eingeschlossene Raum. Soweit in dieser Beschreibung von nach außen weisenden Oberflächen gesprochen wird oder in sonstiger Weise der Begriff "nach außen" verwendet wird, so ist damit eine Richtung gemeint, die von der Längsachse des Clips fortweist.

Bei dem erfindungsgemäßen Clip ist ein Rastvorsprung und eine Rastaufnahme vorgesehen. Insbesondere bevorzugt bilden der Rastvorsprung und die Rastaufnahme einen Verschluss. Der Rastvorsprung springt in eine Rastrichtung vor und weist eine entgegen der Rastrichtung gewandte Rastoberfläche auf, wobei die Rastoberfläche in einer Ebene angeordnet ist, die nicht parallel zur ersten Seitenwand und/oder nicht parallel zur zweiten Seitenwand verläuft. Die Rastaufnahme weist eine Kante und eine sich an die Kante anschließende Gegenfläche auf, wobei der in Rastrichtung vorspringende Rastvorsprung über die Kante ragt, so dass die Rastoberfläche der Gegenfläche zugewandt ist. Dadurch, dass die Rastoberfläche der Gegenfläche zugewandt ist, stößt die Rastoberfläche an die Gegenfläche, wenn sie in Richtung auf die Gegenfläche bewegt wird. Damit wird die Möglichkeit geschaffen, die Bewegung zweier Elemente des Clips relativ zueinander, nämlich die Bewegung eines ersten Elements, das den Rastvorsprung aufweist, relativ zu einem zweiten Element, das die Rastaufnahme aufweist, zumindest in die Richtung zu verhindern, bzw. ab einer gewissen Wegstrecke zu blockieren, nämlich wenn die Rastoberfläche die Gegenfläche kontaktiert.

Aufgabe des Rastvorsprungs ist es, einen Teil des einen Elements des Clips, das durch das Zusammenwirken von Rastvorsprung und Rastaufnahme zumindest in eine Richtung nicht oder nur über einen bestimmten Weg von einem anderen Element fortbewegbar ausgeführt sein soll, bereitzustellen, der mit der Rastaufnahme zusammenwirken kann, nämlich durch das Überkragen des Rastvorsprungs über die Kante der Rastaufnahme. Diese Aufgabe kann bereits durch einen Rastvorsprung erfüllt werden, der fingerartig in Rastrichtung von einem Teil des einen Elements vorspringt. Dabei ist der Rastvorsprung insbesondere bevorzugt nach Art eine Fingers schmal ausgeführt. Es sind aber auch Bauformen denkbar, bei denen die Erstreckung des Rastvorsprungs in eine Richtung senkrecht zur Rastrichtung breiter ausgeführt ist und der Rastvorsprung beispielsweise nach Art eines Kantblechs oder Winkelblechs ausgeführt ist. Der Rastvorsprung kann aber auch durch einen blockartigen Abschnitt eines Elements eines Clips gebildet werden, der von übrigen Abschnitten dieses Elements auskragt.

In einer bevorzugten Ausführungsform weist der Rastvorsprung einen sich in Rastrichtung erstreckenden Grundkörper auf, von dem Material in eine Richtung senkrecht zur Rastrichtung vorspringt, wobei an diesem Material eine Oberfläche ausgebildet ist, die die entgegen der Rastrichtung gewandte Rastoberfläche bildet.

Aufgabe der Rastaufnahme ist es, die Gegenfläche bereitzustellen, der die Rastoberfläche zugewandt ist, und eine Kante zu bilden, so dass der Rastvorsprung von einem hinter der Gegenfläche liegenden Bereich über die Kante ragen kann und dadurch die Rastoberfläche in einer der Gegenfläche zugewandte Position bringen kann. Aufgabe der Kante ist es somit allein, die Erstreckung des die Gegenfläche aufweisenden Elements in Richtung auf den vorspringenden Rastvorsprung zu beschränken. Diese Aufgabe kann mit vielfältigen Gestaltungen von Kanten erreicht werden. In einer bevorzugten Ausführungsform wird die Kante durch zwei in einem Winkel, insbesondere bevorzugt im Winkel von 90° aneinanderstoßende Fläche gebildet, von denen die Gegenfläche insbesondere bevorzugt eine ist. Dabei muss die Gegenfläche aber nicht zwingend an die Kante angrenzen (auch wenn dies bevorzugt wird). Es ist auch denkbar, das weitere, nicht zur Gegenfläche gehörende Oberflächenbereiche zwischen der Kante und der Gegenfläche vorgesehen sind. In einer alternativen Ausführungsform weist die Kante eine Fase auf oder ist im Querschnitt kreisbogenförmig ausgeführt.

Der mit der Erfindung geschaffene Verschluss kann in unterschiedlichen Bereichen eines Clips eingesetzt werden, um die Bewegung zweier Elemente des Clips relativ zueinander, nämlich die Bewegung eines ersten Elements, das den Rastvorsprung aufweist, relativ zu einem zweiten Element, das die Rastaufnahme aufweist, zumindest in die Richtung zu verhindern, bzw. ab einer gewissen Wegstrecke zu blockieren, nämlich wenn die Rastoberfläche die Gegenfläche kontaktiert. Indem die Erfindung festlegt, dass die Rastoberfläche in einer Ebene angeordnet ist, die nicht parallel zur ersten Seitenwand und/oder nicht parallel zur zweiten Seitenwand verläuft, stellt sie darauf ab, Bewegungen zweier Elemente des Clips relativ zueinander zu verhindern, bei denen die Bewegungsrichtung eine Komponente parallel zur ersten Seitenwand und/oder parallel zur zweiten Seitenwand hätte.

Insbesondere bevorzugt sind Rastvorsprung und Rastaufnahme an gleichartigen Elementen des Clips vorgesehen. Beispielsweise kann der Rastvorsprung von der ersten Seite vorspringen und die Rastaufnahme an der zweiten Seite vorgesehen sein. Ebenso kann der Rastvorsprung von der ersten Seitenwand vorspringen und die Rastaufnahme an der zweiten Seitenwand ausgeführt sein. Ebenso kann die Spitze zweiteilig ausgeführt ist und durch einen die erste Seite fortsetzenden, nach innen umgebogenen ersten Bandabschnitt und einen die zweite Seite fortsetzenden, nach innen umgebogenen zweiten Bandabschnitt gebildet wird, wobei sich der erste Bandabschnitt mit einem ersten Innenabschnitt von der Spitze in Richtung auf den Kopf hin fortsetzt und wobei sich der zweite Bandabschnitt mit einem zweiten Innenabschnitt von der Spitze in Richtung auf den Kopf hin fortsetzt und wobei der Rastvorsprung von dem ersten Innenabschnitt vorspringt und die Rastaufnahme als Teil des zweiten Innenabschnitts ausgebildet ist. Alternativ sind Ausführungsformen denkbar, bei denen der Rastvorsprung und die Rastaufnahme nicht an gleichartigen Elementen des Clips vorgesehen sind, beispielsweise der Rastvorsprung von der ersten Seite vorspringt und die Rastaufnahme als Teil der zweiten Seitenwand oder des zweiten Innenabschnitts ausgeführt ist oder beispielsweise der Rastvorsprung von der ersten Seitenwand vorspringt und die Rastaufnahme als Teil der zweiten Seite oder des zweiten Innenabschnitts ausgeführt ist oder beispielsweise der Rastvorsprung von dem ersten Innenabschnitt vorspringt und die Rastaufnahme als Teil der zweiten Seite oder der zweiten Seitenwand ausgeführt ist.

In einer bevorzugten Ausführungsform können der Rastvorsprung und/oder die Rastaufnahme als eine Hinterschneidung ausgebildet. Eine Hinterschneidung ist ein Konstruktionselement, das verhindern kann, dass die Rastaufnahme bzw. der Rastvorsprung sich frei bewegen kann. Die Bewegung der Seitenwände relativ zueinander kann durch die Ausbildung von Rastvorsprung und Rastaufnahme verringert oder nahezu vollständig verhindert werden. Es kann eine der Rastaufnahme zugeordnete Fläche und eine dem Rastvorsprung zugeordnete Fläche existieren, die im Wesentlich parallel zueinander verlaufen. Es kann ein Flächenpaar an Rastvorsprung und Rastaufnahme existieren, welches mit der Längsachse des Schaftes des Clips einen Winkel einschließt, der kleiner als 45° ist. Insbesondere kann der Winkel kleiner als 40°, bevorzugt kleiner als 30°, insbesondere bevorzugt kleiner als 20°, ganz besonders bevorzugt kleiner als 10° sein. In einer Ausführungsform kann der Winkel im Wesentlichen nur eine geringfügige oder gar keine Abweichung von der Längsachse des Schafts aufweisen. Es kann somit ein Flächenpaar an Rastaufnahme und Rastvorsprung existieren, welches im Wesentlichen parallel zur Längsachse des Schaftes ausgebildet ist.

In einer bevorzugten Ausführungsform ist die Rastoberfläche eben und/oder die Gegenfläche eben ausgeführt. In einer bevorzugten Ausführungsform sind die Rastoberfläche und die Gegenfläche parallel zueinander ausgerichtet.

In einer bevorzugten Ausführungsform ist der Rastvorsprung als Vorsprung und/oder die Rastaufnahme als Ausnehmung ausgebildet. So kann beispielsweise ein Vorsprung der jeweiligen Seitenwand in eine Ausnehmung der gegenüberliegenden Seitenwand eingreifen. Analog zu den genannten Ausführungen bezüglich der Rastaufnahmen und Rastvorsprüngen kann durch das funktional zusammenwirkende Elementepaar aus Vorsprung und Ausnehmung die Bewegung der Seitenwände relativ zueinander, hier beispielsweise auch entlang der Längsachse des Clips, verringert oder nahezu vollständig verhindert werden. Im Kontext dieser Beschreibung greift ein Vorsprung in eine Ausnehmung ein, wenn der Vorsprung und/oder die Ausnehmung eine Öffnung für das jeweils andere Element bildet und sich das jeweils andere Element in dieser Öffnung befindet.

In einer besonders bevorzugten Ausführungsform ist die Rastoberfläche in einer Ebene angeordnet ist, die senkrecht zur ersten Seitenwand und/oder senkrecht zur zweiten Seitenwand verläuft. Hierdurch kann eine starke Verschluss- und/oder Koppelwirkung von beiden Seiten des Clips erzielt werden, insbesondere zur Fixierung und Verhinderung eines Auseinanderdriftens beider Seiten in der primären Spreizrichtung, welche senkrecht zu den Oberflächen der beiden Seiten zeigt. Eine ausreichende Wirkung kann bereits erzielt werden, wenn eine Rastoberfläche im Wesentlichen senkrecht zur ersten Seitenwand oder senkrecht zur zweiten Seitenwand verläuft. Die die in diesem Abschnitt genannten Ausführungen für eine Rastoberfläche gelten in einer bevorzugten Ausführungsform gleichsam für eine Gegenfläche.

In einer anderen bevorzugten Ausführungsform hintergreift der Rastvorsprung der jeweiligen Seite auf der jeweils gegenüberüberliegenden Seite eine Rastaufnahme, welche aus der Hauptebene der gegenüberliegenden Seite absteht und/oder herausgebogen ist.

Zusätzlich zu einer Verhinderung der relativen Bewegung der beiden Seiten und/oder Seitenwände des Clips, an denen das funktional zusammenwirkende Elementepaar ausgebildet ist, kann somit nicht nur die Bewegung gegenüberliegender Seitenwände und/oder Seiten voneinander weg verhindert werden, sondern zusätzlich insbesondere eine Relativbewegung senkrecht zur Hauptebene der Seitenwände.

In einer weiteren Ausführungsform kann der Rastvorsprung in Form eines von einer Seitenwand und/oder dem Schaftseite in Richtung der gegenüberliegenden Seitenwand und/oder Schaftseite abstehenden Arm mit einem Haken am Endes ausgebildet sein, welcher eine längliche Ausnehmung, im Besonderen ein Langloch, im Bereich der Spitze und/oder eines Bandabschnittes und/oder eines Bogenabschnittes hintergreift. Insbesondere kann sich die längliche Ausnehmung im Wesentlichen von der Spitze des Clips über die beiden Bogen- und/oder Bandabschnitte mit dem die Spitze bildenden Scheitel erstrecken. Im Besonderen weist die Spitze des Rastvorsprungs einen verbreiterten Abschnitt auf, welcher insbesondere die Ausnehmung senkrecht zur seiner Längserstreckung hintergreift. Insbesondere wird der Rastvorsprung klemmend und/oder rastend in der Ausnehmung gehalten.

Die beiden funktionalen Elementepaare bilden im fertig montierten Zustand vorzugsweise einen Verschluss, welcher insbesondere irreversibel ist.

In einer bevorzugten Ausführungsform springt der Rastvorsprung von der ersten Seitenwand vor und die Rastaufnahme wird als Teil der zweiten Seitenwand oder durch ein von der zweiten Seitenwand nach innen vorspringenden Abschnitt gebildet.

In einer besonders bevorzugten Ausführungsform ist die Rastaufnahme als Teil einer an der Seitenwand und/oder Seite ausgeführten Ausnehmung ausgebildet. Eine Ausnehmung stellt insbesondere eine einfache Realisierungsmöglichkeit einer Rastaufnahme dar, kann dabei aber dieselben zweckmäßigen Eigenschaften der oben ausführlicher beschriebenen Rastaufnahme aufweisen.

In einer ebenfalls bevorzugten Ausführungsform weisen jeweils gegenüberliegende Seitenwände ein Profil aus Vorsprüngen und Ausnehmungen auf, welche komplementär zueinander geformt sind. Ein an gegenüberliegenden Seitenwänden ausgebildete komplementäre Formung mit Vorsprüngen und Ausnehmungen kann zu einer weiteren Stabilisierung des Clips führen, in dem Flächenpaarungen geschaffen werden können, die einander zugeordnet sind und zusammenwirken können. Das Zusammenwirken der Flächenpaarung von Rastaufnahme und Rastvorsprung kann bei Belastung des Clips vorliegen, sodass ein in Kontaktstehen der Flächenpaarungen von Ausnehmungen und Vorsprüngen nicht ständig vorliegen muss, sondern nur auf den Belastungsfall beschränkt sein kann. Eine Bewegung der Seitenwände relativ zueinander kann mittels einer vorgesehenen Profilierung reduziert werden.

In einer bevorzugten Ausführungsform bildet der Verschluss aus Rastvorsprung und Rastaufnahme eine Verriegelung und verhindert somit ein Spreizen der Seiten. Hierdurch kann verhindert werden, dass die Seiten des Clips beispielsweise in eine Öffnungsstellung gelangen, wie sie zumindest zeitweilig bei der Herstellung des Clips vorhanden sein kann. Im Kontext der Beschreibung umfasst der Begriff "irreversibler Verschluss" einen Verschluss, der entgegen der Richtung der Ausbildung des Verschlusses nicht ohne Zerstörung des Clips wieder rückgängig gemacht werden kann.

In einer bevorzugten Ausführungsform weist die erste Seitenwand und/oder die zweite Seitenwand einen oder mehrere vorstehende Finger auf, der bzw. die über einen Bereich der jeweils gegenüberliegenden Seitenwand überlappt Im Kontext dieser Beschreibung überlappt ein Finger über einen Bereich einer Seitenwand, wenn zumindest ein Teil des Fingers so angeordnet ist, dass er eine Flächennormale einer Oberfläche dieses Bereichs schneidet und/oder eine Linie senkrecht zu einer Längsachse des Fingers den Bereich der Seitenwand schneidet. Es ist für den Erfolg der Erfindung nicht zwingend notwendig, dass sich eine Oberfläche des Fingers in Kontakt mit einer Oberfläche des Bereichs der Seitenwand befindet, mit der der Finger überlappt. In einer bevorzugten Ausführungsform steht jedoch eine Oberfläche des Fingers mit der Oberfläche des Bereichs der Seitenwand, mit der er überlappt, im Kontakt.

In einer bevorzugten Ausführungsform weist eine der beiden Seitenwände, beispielsweise die erste Seitenwand, mehrere vorstehende Finger auf, die über andere Bereiche der gegenüberliegenden Seitenwand überlappen. Damit kann die erste Seitenwand einen ersten vorstehenden Finger aufweisen, der über einen Bereich der zweiten Seitenwand überlappt, wobei die erste Seitenwand einen zweiten vorstehenden Finger aufweisen kann, der über einen anderen Bereich der zweiten Seitenwand überlappt. Hierdurch kann der Schaft des Clips besonders torsions- und knicksteif ausgebildet werden, wenn zwei vorstehende Finger einer ersten Seitenwand mit Bereichen der zweiten Seitenwand überlappen.

In einer bevorzugten Ausführungsform ist die Länge des Fingers größer als die Breite des Fingers, wobei als Länge die Richtung der Erstreckung des Fingers von der ersten Seitenwand in Richtung auf die zweite Seitenwand verstanden wird. Neben der senkrecht zur Länge stehenden Breite weist der Finger insbesondere bevorzugt eine Höhe auf, die in der Regel durch die Materialstärke vorgegeben ist und auch als Dicke bezeichnet werden kann. In einer bevorzugten Ausführungsform ist die Breite des Fingers größer als die Höhe (Dicke) des Fingers. In einer bevorzugten Ausführungsform erstreckt sich die Breitenrichtung des Fingers parallel zur Längsachse des Clips und/oder die Längsrichtung des Fingers senkrecht zur Längsachse oder senkrecht zu einer Linie, die parallel zur Längsachse verläuft.

In einer bevorzugten Ausführungsform weist die erste Seitenwand einen Grundkörper auf, von dem der erste vorstehende Finger vorsteht, bzw. der zweite vorstehende Finger vorsteht. Der Grundkörper weist insbesondere bevorzugt eine Länge auf, wobei unter der Länge insbesondere die Erstreckung des Grundkörpers von der ersten Seite in Richtung auf die zweite Seite verstanden wird. In einer bevorzugten Ausführungsform geht die erste Seite über eine Kante in die erste Seitenwand über. Als Länge wird dann insbesondere die maximale Erstreckung des Grundkörpers von dieser Kante in Richtung auf die zweite Seite verstanden. Ergänzend oder alternativ erstreckt sich die Längenrichtung des Grundkörpers senkrecht zur Längsachse des Clips, bzw. senkrecht zu einer Linie, die parallel zur Längsachse des Clips verläuft. Der Grundkörper hat insbesondere bevorzugt auch eine Breite, die sich insbesondere bevorzugt in eine Richtung parallel zur Längsachse des Clips erstreckt. Der Grundkörper hat ferner eine Höhe, die auch als Dicke bezeichnet werden kann und meist durch die Materialstärke vorgegeben ist. In einer bevorzugten Ausführungsform ist die Breite des Grundkörpers größer als die Länge des Grundkörpers.

In einer bevorzugten Ausführungsform ist die Breite des ersten vorstehenden Fingers und/oder die Breite des zweiten vorstehenden Fingers kleiner als die Breite des Grundkörpers. In einer bevorzugten Ausführungsform ist die Breite eines vorstehenden Fingers kleiner als die Hälfte der Breite des Grundkörpers, insbesondere bevorzugt kleiner als ein Drittel, insbesondere bevorzugt kleiner als ein Viertel der Breite des Grundkörpers.

In einer bevorzugten Ausführungsform ist die Breite des ersten vorstehenden Fingers gleich der Breite des zweiten vorstehenden Fingers. In einer bevorzugten Ausführungsform ist der Abstand des Endes des ersten vorstehenden Fingers zu der zweiten Seite gleich dem Abstand des zweiten vorstehenden Fingers zu der zweiten Seite.

In einer bevorzugten Ausführungsform ist die Breite des Grundkörpers der ersten Seitenwand und/oder die Breite des Grundkörpers der zweiten Seitenwand größer als 40 %, insbesondere bevorzugt größer als 50 %, insbesondere größer als 60 %, insbesondere bevorzugt größer als 70 % und insbesondere bevorzugt größer als 80 % der Erstreckung des Schafts des Clips ist.

In einer bevorzugten Ausführungsform ist die Länge des vorstehenden Fingers kleiner als die maximale Länge des Grundkörpers. In einer alternativen Ausführungsform ist die Länge des vorstehenden Fingers gleich der maximalen Länge des Grundkörpers. In einer alternativen Ausführungsform ist die Länge des vorstehenden Fingers größer als die maximale Länge des Grundkörpers.

In einer bevorzugten Ausführungsform geht die erste Seite über eine Kante in die erste Seitenwand über, wobei diese Kante durch eine Ausnehmung unterbrochen wird. In einer bevorzugten Ausführungsform erstreckt sich ein in Richtung nach außen federnd vorgespanntes Element des Clips von innen durch die Ausnehmung hindurch nach außen. Unter einer Vorspannung nach außen wird dabei auch eine Ausführungsform verstanden, bei der das vorgespannte Element eine Ruheposition hat, in der es von einem Teilbereich des Schafts, beispielsweise einer Seite des Schafts, vorsteht und aus der es unter Krafteinwirkung hinausbewegt werden kann, insbesondere bevorzugt in eine Richtung senkrechts zur Schaftachse (Längsachse), bzw. ein einer Richtung die parallel zu einer Senkrechten auf die Schaftachse (Längsachse) verläuft. Insbesondere bevorzugt ist das vorgespannte Element mit einem federnden Element verbunden oder Teil eines federnden Elements, so dass es unter Krafteinwirkung gegen eine zunehmende Federkraft aus der Ruheposition bewegt werden muss und die Federkraft bewirkt, dass der Vorsprung nach Wegfall der Krafteinwirkung in seine Ruheposition zurückkehrt. In einer bevorzugten Ausführungsform ist die Ruheposition die Position, in der das federnde Element keine Kraft ausübt. Die Ruheposition kann, muss aber nicht durch einen Anschlag definiert sein, gegen den das federnde Element das vorgespannte Element drückt oder zieht. In einer bevorzugten Ausführungsform geht die zweite Seite über eine Kante in die zweite Seitenwand über, wobei diese Kante durch eine Ausnehmung unterbrochen wird. In einer bevorzugten Ausführungsform erstreckt sich ein in Richtung nach außen federnd vorgespanntes Element des Clips von innen durch die Ausnehmung hindurch nach außen.

In einer bevorzugten Ausführungsform geht die erste Seite über eine Kante in die erste Seitenwand über, wobei sich die Kante in eine Richtung parallel zur Längsachse des Clips erstreckt. In einer bevorzugten Ausführungsform geht die zweite Seite über eine Kante in die zweite Seitenwand über, wobei sich die Kante in eine Richtung parallel zur Längsachse des Clips erstreckt.

In einer bevorzugten Ausführungsform ist der Bereich der zweiten Seite, über den der erste vorstehende Finger der ersten Seitenwand überlappt benachbart dem Bereich der zweiten Seite angeordnet, über den der zweite vorstehende Finger der ersten Seitenwand überlappt. Insbesondere bevorzugt sind die der erste vorstehende Finger der ersten Seitenwand und der zweite vorstehende Finger der ersten Seitenwand nebeneinander angeordnet.

Insbesondere bevorzugt ist der erste vorstehende Finger der ersten Seitenwand einem ersten Ende eines Grundkörpers der ersten Seitenwand (in Breitenrichtung der Seitenwand gesehen) näher, als einem gegenüberliegenden, zweiten Ende des Grundkörpers. Insbesondere bevorzugt ist das erste Ende das dem Kopf nähere Ende des Grundkörpers. Ergänzend oder alternativ ist der zweite vorstehende Finger der ersten Seitenwand dem zweiten Ende des Grundkörpers der ersten Seitenwand (in Breitenrichtung der Seitenwand gesehen) näher, als dem gegenüberliegenden, ersten Ende des Grundkörpers. Insbesondere bevorzugt ist das zweite Ende das der Spitze nähere Ende des Grundkörpers.

In einer bevorzugten Ausführungsform weist die erste Seitenwand einen flachen Grundkörper auf. In einer bevorzugten Ausführungsform weist die zweite Seitenwand einen flachen Grundkörper auf. Als flacher Grundkörper wird insbesondere bevorzugt ein Grundkörper verstanden, der eine flache, insbesondere bevorzugt in einer Ebene angeordnete Außenoberfläche aufweist. Insbesondere bevorzugt weist der flache Grundkörper zusätzlich eine gleichmäßige Höhe (Dicke) auf. Es ist denkbar, dass ein hier als flach bezeichneter flacher Grundkörper Ausbeulungen, beispielsweise kleine Noppen oder Führungsrippen aufweist oder Einbuchtungen oder Dellen. Auch ein solcher mit bewusst gewählten, singulären Abweichungen von der rein geometrisch flachen Form versehener Grundkörper wird im Zuge der vorliegenden Beschreibung als flacher Grundkörper verstanden. Weist der flache Grundkörper bewusst eine gewählte, singuläre Abweichung von der rein geometrisch flachen Form, beispielsweise Ausbeulungen, beispielsweise kleine Noppen oder Führungsrippen oder Einbuchtungen oder Dellen auf, so ist in einer bevorzugten Ausführungsform die von der singulären Abweichung eingenommene Fläche in der Ebene, die die ansonsten geometrische flache Oberfläche des Grundkörpers einnimmt, kleiner als 30%, insbesondere bevorzugt kleiner als 20%, insbesondere bevorzugt kleiner als 10% der Fläche der verbleibenden, geometrisch flachen Oberfläche. Weist der flache Grundkörper bewusst mehrere gewählte, singuläre Abweichung von der rein geometrisch flachen Form, beispielsweise Ausbeulungen, beispielsweise kleine Noppen oder Führungsrippen oder Einbuchtungen oder Dellen auf, so ist in einer bevorzugten Ausführungsform die von jeder singulären Abweichung jeweils eingenommene Fläche in der Ebene, die die ansonsten geometrische flache Oberfläche des Grundkörpers einnimmt, kleiner als 30%, insbesondere bevorzugt kleiner als 20%, insbesondere bevorzugt kleiner als 10% der Fläche der verbleibenden, geometrisch flachen Oberfläche. Weist der flache Grundkörper bewusst mehrere gewählte, singuläre Abweichung von der rein geometrisch flachen Form, beispielsweise Ausbeulungen, beispielsweise kleine Noppen oder Führungsrippen oder Einbuchtungen oder Dellen auf, so ist in einer bevorzugten Ausführungsform die Summe aller von den singulären Abweichung eingenommenen Flächen in der Ebene, die die ansonsten geometrische flache Oberfläche des Grundkörpers einnimmt, kleiner als 30%, insbesondere bevorzugt kleiner als 20%, insbesondere bevorzugt kleiner als 10% der Fläche der verbleibenden, geometrisch flachen Oberfläche. In einer bevorzugten Ausführungsform ist der flache Grundkörper auch im geometrischen Sinne gänzlich flach und weist keine singulären Abweichung von der rein geometrisch flachen Form auf.

In einer bevorzugten Ausführungsform ist der erste Finger fluchtend mit einem flachen Grundkörper der ersten Seitenwand ausgeführt. Insbesondere bevorzugt liegt die nach außen weisende Oberfläche des Fingers in einer Ebene mit der nach außen weisenden Oberfläche des Grundkörpers. In einer bevorzugten Ausführungsform weist der vorstehende Finger zusätzlich die gleiche Materialstärke (Dicke; Höhe) auf wie der Grundkörper. Insbesondere bevorzugt befindet sich zwischen dem Grundkörper und dem ersten vorstehenden Finger kein Biegeabschnitt.

In einer besonders bevorzugten Ausführungsform weist die erste Seitenwand einen flachen Grundkörper auf, wobei der zweite vorstehende Finger einen nach außen oder nach innen gebogenen Bogenabschnitt aufweist. In einer bevorzugten Ausführungsform weist der zweite vorstehende Finger einen Endabschnitt auf, der parallel zum flachen Grundkörper verläuft. Darunter wird insbesondere bevorzugt verstanden, dass der Endabschnitt des zweiten Fingers eine nach außen weisende Oberfläche aufweist, die in einer Ebene verläuft, die gegebenenfalls parallel zu einer Ebene verläuft, in der sich die nach außen weisende Oberfläche des Grundkörpers erstreckt. Insbesondere bevorzugt weist der Endabschnitt des zweiten vorstehenden Fingers zusätzlich die gleiche Materialstärke auf, wie der Grundkörper. In einer bevorzugten Ausführungsform befindet sich zwischen dem Grundkörper und dem Endabschnitt des zweiten Fingers ein Biegeabschnitt. Insbesondere bevorzugt ist der Biegeabschnitt als Doppelbiegung ausgebildet, der zunächst in eine erste Richtung gebogen ist und dann im weiteren Verlauf in eine andere Richtung gebogen ist.

In einer bevorzugten Ausführungsform hat die zweite Seitenwand eine Aufnahme, um den ersten vorstehenden Finger aufzunehmen. Als Aufnahme wird insbesondere eine Eindellung in einen Grundkörper der zweiten Seitenwand verstanden oder ein Abschnitt der Seitenwand, der sich parallel versetzt zu einem flachen Grundkörper der Seitenwand erstreckt, wobei der Übergang zwischen dem flachen Grundkörper und dem parallel versetzten Abschnitt vorzugsweise durch eine Kehle gebildet wird. Dabei ist davon auszugehen, dass sich der parallel versetzt vorgesehene Abschnitt aus fertigungstechnischen Gründen nicht wird perfekt parallel ausgerichtet ausführen lassen und deshalb ggf. auch winkelig zum flachen Grundkörper stehen kann. Ebenso wird es aus fertigungstechnischen Gründen ggf. nicht möglich sein, den parallel versetzten, bzw. winkelig verlaufenden Abschnitt perfekt eben zu gestalten. In einer besonders bevorzugten Ausführungsform fluchtet der erste vorstehende Finger der ersten Seitenwand mit einem flachen Grundkörper der zweiten Seitenwand. Um bei einer derartigen Ausführungsform ein Überlappen des ersten vorstehenden Fingers der ersten Seitenwand mit einem Bereich der zweiten Seitenwand zu ermöglichen, wird der Bereich der zweiten Seitenwand, mit dem ein derart ausgeführter erster vorstehender Finger der ersten Seitenwand überlappt durch eine rücksprungartige oder ausnehmungsartige oder taschenartige oder als Eindellung ausgeführte Aufnahme des zweiten Grundkörpers gebildet.

In einer bevorzugten Ausführungsform hat die zweite Seitenwand zumindest einen vorstehenden Finger, der über einen Bereich der ersten Seitenwand überlappt. In einer bevorzugten Ausführungsform ist der vorstehende Finger der zweiten Seitenwand so ausgebildet, wie der zweite vorstehende Finger der ersten Seitenwand.

In einer bevorzugten Ausführungsform weist die erste Seitenwand einen flachen Grundkörper auf, wobei eine Schmalseite des Grundkörpers der ersten Seite der zweiten Seitenwand zugewandt ist, wobei die zweite Seitenwand einen flachen Grundkörper aufweist, wobei eine Schmalseite des Grundkörpers der zweiten Seitenwand der ersten Seitenwand zugewandt ist. In einer bevorzugten Ausführungsform erstreckt sich die Schmalseite des Grundkörpers rechtwinklig zu einer nach außen weisenden Oberfläche des Grundkörpers. In dieser bevorzugten Ausführungsform ist die Schmalseite der ersten Seitenwand und/oder die Schmalseite der zweiten Seitenwand zumindest abschnittweise eben ausgebildet. In einer bevorzugten Ausführungsform erstreckt sich die Schmalseite der ersten Seitenwand in einer Ebene, die parallel zur Längsachse verläuft oder die Längsachse des Clips enthält und/oder die Schmalseite der zweiten Seitenwand einer Ebene, die parallel zur Längsachse verläuft oder die Längsachse des Clips enthält.

In einer bevorzugten Ausführungsform überlappt der erste vorstehende Finger über einen Bereich des Grundkörpers der zweiten Seitenwand, der an die ebene Schmalseite der zweiten Seitenwand angrenzt, und/oder der zweite vorstehende Finger über einen Bereich des Grundkörpers der zweiten Seitenwand, der an die ebene Schmalseite der zweiten Seitenwand angrenzt.

In einer bevorzugten Ausführungsform weist die erste Seitenwand einen flachen Grundkörper und eine in einem ersten Abschnitt ebene Schmalseite auf, wobei sich der ebene Abschnitt der Schmalseite in eine Richtung parallel zur Längsachse des Clips erstreckt. In dieser Ausführungsform weist der Grundkörper anschließend an den ebenen Abschnitt der Schmalseite einen in Richtung auf die zweite Seitenwand vorspringenden Vorsprung auf. In einer bevorzugten Ausführungsform greift der Vorsprung in einen Rücksprung oder eine Ausnehmung ein, die in der zweiten Seitenwand vorgesehen ist. In einer bevorzugten Ausführungsform weist die zweite Seitenwand einen flachen Grundkörper und eine in einem ersten Abschnitt ebene Schmalseite auf, wobei sich der Rücksprung oder die Ausnehmung an den ebenen Abschnitt der Schmalseite anschließt. Ergänzend oder alternativ weist die zweite Seitenwand einen flachen Grundkörper und eine in einem ersten Abschnitt ebene Schmalseite auf, wobei sich der ebene Abschnitt der Schmalseite in eine Richtung parallel zur Längsachse des Clips erstreckt. In dieser Ausführungsform weist der Grundkörper anschließend an den ebenen Abschnitt der Schmalseite einen in Richtung auf die erste Seitenwand vorspringenden Vorsprung auf. In einer bevorzugten Ausführungsform greift der Vorsprung in einen Rücksprung oder eine Ausnehmung ein, die in der ersten Seitenwand vorgesehen ist. In einer bevorzugten Ausführungsform weist die erste Seitenwand einen flachen Grundkörper und eine in einem ersten Abschnitt ebene Schmalseite auf, wobei sich der Rücksprung oder die Ausnehmung an den ebenen Abschnitt der Schmalseite anschließt. Dabei sind diese Vorsprünge keine vorstehenden Finger, weil sie nicht mit einem Bereich der gegenüberliegenden Seitenwand überlappen. Durch dieses Zusammenwirken aus Vorsprüngen und Rücksprüngen an den Schmalseiten der Grundkörper der Seitenwände kann eine Verzahnung erzeugt werden, die die Steifigkeit des Clips erhöht, weil sie Relativbewegungen der Grundkörper der Seitenwände in Richtung parallel zur Längsrichtung des Clips verhindert.

In einer bevorzugten Ausführungsform ist ein Bogen an einem Ende der ersten Seite vorgesehen, wobei der Scheitel des Bogens am Ende der ersten Seite einen Teil der Spitze des Clips ausbildet und/oder ein Bogen an einem Ende der zweiten Seite vorgesehen, wobei der Scheitel des Bogens am Ende der zweiten Seite einen Teil der Spitze des Clips ausbildet. Dabei kann der Bogen ausgehend von der Seite nach innen ausgeführt werden, wie dies beispielsweise bei dem Umbiegeabschnitt 15 der WO 2012/104205 A1 vorgesehen ist. Ebenso kann der Bogen nach außen gebogen sein.

In einer bevorzugten Ausführungsform hat die erste Seite einen flachen Grundkörper, der sich von dem Kopf in Richtung auf die Spitze erstreckt, und die erste Seitenwand einen flachen Grundkörper, der in einem Winkel zum flachen Grundkörper der ersten Seite steht, insbesondere bevorzugt in einem Winkel zwischen 45° und 135°, insbesondere bevorzugt in einem Winkel von 90 °.

In einer bevorzugten Ausführungsform hat die zweite Seite einen flachen Grundkörper, der sich von dem Kopf in Richtung auf die Spitze erstreckt, und die zweite Seitenwand einen flachen Grundkörper, der in einem Winkel zum flachen Grundkörper der zweiten Seite steht, insbesondere bevorzugt in einem Winkel zwischen 45° und 135°, insbesondere bevorzugt in einem Winkel von 90 °.

In einer bevorzugten Ausführungsform ist der flache Grundkörper der ersten Seite parallel zum flachen Grundkörper der zweiten Seite ausgerichtet. In einer bevorzugten Ausführungsform weist der Clip eine erste Seite mit flachem Grundkörper, eine zweite, parallel zur ersten Seite ausgerichtete Seite mit flachem Grundkörper, eine erste Seitenwand mit flachem Grundkörper, die sich in einem Winkel von der ersten Seite zur zweiten Seite erstreckt, eine zweite Seitenwand mit flachem Grundkörper, die sich von der zweiten Seite in Richtung auf die erste Seite erstreckt, wobei die erste Seitenwand mit der zweiten Seitenwand fluchtend ausgebildet ist, auf, sowie eine dritte Seitenwand mit flachem Grundkörper, die sich in einem Winkel von der ersten Seite zur zweiten Seite erstreckt, und eine vierte Seitenwand mit flachem Grundkörper, die sich von der zweiten Seite in Richtung auf die erste Seite erstreckt, wobei die dritte Seitenwand mit der vierten Seitenwand fluchtend ausgebildet ist auf. Eine derartige Ausführungsform kann in einem Querschnitt senkrecht zur Längsachse des Clips einen Querschnitt in Form eines rechteckförmigen Rings aufweisen, der nur durch einen Spalt zwischen erster Seitenwand und zweiter Seitenwand sowie durch einen Spalt zwischen dritter Seitenwand und vierter Seitenwand unterbrochen wird.

In einer bevorzugten Ausführungsform ist eine Clipsfläche vorgesehen, die von der ersten Seite vorsteht und die von dem Kopf beabstandet ist und die dem Kopf zugewandt ist. Insbesondere bevorzugt ist diese Clipsfläche an einem federnden Element vorgesehen, das in Richtung nach außen vorgespannt ist. Unter einer Vorspannung nach außen wird dabei auch eine Ausführungsform verstanden, bei der das vorgespannte Element eine Ruheposition hat, in der es von einem Teilbereich des Schafts, beispielsweise einer Seite des Schafts, vorsteht und aus der es unter Krafteinwirkung hinausbewegt werden kann, insbesondere bevorzugt in eine Richtung senkrechts zur Schaftachse (Längsachse), bzw. in einer Richtung, die parallel zu einer Senkrechten auf die Schaftachse (Längsachse) verläuft. Insbesondere bevorzugt ist das vorgespannte Element mit einem federnden Element verbunden oder Teil eines federnden Elements, so dass es unter Krafteinwirkung gegen eine zunehmende Federkraft aus der Ruheposition bewegt werden muss und die Federkraft bewirkt, dass der Vorsprung nach Wegfall der Krafteinwirkung in seine Ruheposition zurückkehrt. In einer bevorzugten Ausführungsform ist die Ruheposition die Position, in der das federnde Element keine Kraft ausübt. Die Ruheposition kann, muss aber nicht durch einen Anschlag definiert sein, gegen den das federnde Element das vorgespannte Element drückt oder zieht. Dieses federnde Element durchgreift insbesondere bevorzugt eine Ausnehmung, die an der ersten Seite und/oder im Übergang von der ersten Seite zur ersten Seitenwand vorgesehen ist. In einer bevorzugten Ausführungsform ist eine Clipsfläche vorgesehen, die von der zweiten Seite vorsteht und die von dem Kopf beabstandet ist und die dem Kopf zugewandt ist. Insbesondere bevorzugt ist diese Clipsfläche an einem federnden Element vorgesehen, das in Richtung nach außen vorgespannt ist. Unter einer Vorspannung nach außen wird dabei auch eine Ausführungsform verstanden, bei der das vorgespannte Element eine Ruheposition hat, in der es von einem Teilbereich des Schafts, beispielsweise einer Seite des Schafts, vorsteht und aus der es unter Krafteinwirkung hinausbewegt werden kann, insbesondere bevorzugt in eine Richtung senkrechts zur Schaftachse (Längsachse), bzw. in einer Richtung die parallel zu einer Senkrechten auf die Schaftachse (Längsachse) verläuft. Insbesondere bevorzugt ist das vorgespannte Element mit einem federnden Element verbunden oder Teil eines federnden Elements, so dass es unter Krafteinwirkung gegen eine zunehmende Federkraft aus der Ruheposition bewegt werden muss und die Federkraft bewirkt, dass der Vorsprung nach Wegfall der Krafteinwirkung in seine Ruheposition zurückkehrt. In einer bevorzugten Ausführungsform ist die Ruheposition die Position, in der das federnde Element keine Kraft ausübt. Die Ruheposition kann, muss aber nicht durch einen Anschlag definiert sein, gegen den das federnde Element das vorgespannte Element drückt oder zieht. Dieses federnde Element durchgreift insbesondere bevorzugt eine Ausnehmung, die an der zweiten Seite und/oder im Übergang von der zweiten Seite zur zweiten Seitenwand vorgesehen ist. In einer bevorzugten Ausführungsform sind vier Clipsflächen vorgesehen, zwei die von der ersten Seite vorstehen und zwei, die von der zweiten Seite vorstehen, und die jeweils von dem Kopf beabstandet sind und dem Kopf zugewandt sind, sowie insbesondere bevorzugt jeweils an einem federnden Element vorgesehen sind, das in Richtung nach außen vorgespannt ist. Unter einer Vorspannung nach außen wird dabei auch eine Ausführungsform verstanden, bei der das vorgespannte Element eine Ruheposition hat, in der es von einem Teilbereich des Schafts, beispielsweise einer Seite des Schafts, vorsteht und aus der es unter Krafteinwirkung hinausbewegt werden kann, insbesondere bevorzugt in eine Richtung senkrechts zur Schaftachse (Längsachse), bzw. in einer Richtung die parallel zu einer Senkrechten auf die Schaftachse (Längsachse) verläuft. Insbesondere bevorzugt ist das vorgespannte Element mit einem federnden Element verbunden oder Teil eines federnden Elements, so dass es unter Krafteinwirkung gegen eine zunehmende Federkraft aus der Ruheposition bewegt werden muss und die Federkraft bewirkt, dass der Vorsprung nach Wegfall der Krafteinwirkung in seine Ruheposition zurückkehrt. In einer bevorzugten Ausführungsform ist die Ruheposition die Position, in der das federnde Element keine Kraft ausübt. Die Ruheposition kann, muss aber nicht durch einen Anschlag definiert sein, gegen den das federnde Element das vorgespannte Element drückt oder zieht.

In einer bevorzugten Ausführungsform weist ein die Clipsfläche aufweisendes, federndes Element eine Abschrägung auf. Die Abschrägung kann so ausgebildet sein, dass sich die Abschrägung in Richtung auf die Spitze verjüngt. Dies ermöglicht es, dass das federnde Element beim Einschieben des Clips mit der Spitze in ein Loch eines Elements mit dem das Loch begrenzenden Rand in Kontakt kommt und durch diesen Rand entgegen der Federvorspannung nach innen gedrückt wird.

In einer bevorzugten Ausführungsform weist der Kopf des Clips eine Kopffläche auf, die der Clipsfläche zugewandt ist. In einer besonders bevorzugten Ausführungsform verläuft die Clipsfläche parallel zur Kopffläche, wenn das federnde Element sich in seiner Ausgangslage befindet, also nach außen gefedert ist. In einer bevorzugten Ausführungsform ist die Kopffläche an einem feststehenden Bereich des Kopfes ausgebildet. In einer alternativen Ausführungsform weist der Kopf federnde Arme auf, die in eine Richtung parallel zur Längsrichtung des Clips federn können, wobei die Kopffläche an einem Abschnitt des Arms vorgesehen ist, vorzugsweise an einem Endabschnitt des Arms vorgesehen ist.

In einer bevorzugten Ausführungsform sind der Kopf und die erste Seite und die erste Seitenwand und die zweite Seite und die zweite Seitenwand alle Teil eines einstückigen Elements, die durch das Biegen von Abschnitten eines Metallabschnitts erzeugt wurden. Ebenso ist es denkbar, den erfindungsgemäßen Clip aus Kunststoff, beispielsweise durch Spritzguss herzustellen.

Gemäß einem weiteren Aspekt der Erfindung, der auch mit dem vorbeschriebenen ersten Aspekt kombiniert werden kann, wird ein Clip zum Befestigen eines ersten Elements an einem zweiten Element vorgeschlagen, wobei der Clip
- einen Kopf und eine Spitze und
- eine erste Seite und eine zweite Seite aufweist, wobei sich die erste Seite vom dem Kopf in Richtung auf die Spitze erstreckt und die zweite Seite sich von dem Kopf in Richtung auf die Spitze erstreckt,
- wobei sich eine erste Seitenwand von der ersten Seite in
   Richtung auf die zweite Seite erstreckt,
wobei der Kopf eine Seitenfläche aufweist und eine der Spitze zugewandte Kontaktfläche und
die Seitenfläche des Kopfes über eine erste gerundete Kante in die der Spitze zugewandte Kontaktfläche des Kopfes übergeht und die erste Seite über eine zweite gerundete Kante in die erste Seitenwand übergeht und die erste gerundete Kante über einen Bogenabschnitt in die zweite gerundete Kante übergeht.
In einer besonders bevorzugten Ausführungsform ist bei dem vorstehend beschriebenen ersten Aspekt der Erfindung das erste Bauteil so ausgeführt, dass das erste Bauteil
- einen Kopf und eine Spitze und
- eine erste Seite und eine zweite Seite aufweist, wobei sich die erste Seite vom dem Kopf in Richtung auf die Spitze erstreckt und die zweite Seite sich von dem Kopf in Richtung auf die Spitze erstreckt,
- wobei sich eine erste Seitenwand von der ersten Seite in Richtung auf die zweite Seite erstreckt,
wobei der Kopf eine Seitenfläche aufweist und eine der Spitze zugewandte Kontaktfläche und
die Seitenfläche des Kopfes über eine gerundete Kante in die der Spitze zugewandte Kontaktfläche des Kopfes übergeht, und/oder
die erste Seite über eine gerundete Kante in die erste Seitenwand übergeht.

Durch den Einsatz der gerundeten Kanten werden Spitzen, Rücksprünge oder Kanten in diesen Bereichen vermieden, die zur Beschädigung der zu verbindenden Elemente führen können. Insbesondere in der Ausführungsform, in der die Seitenfläche des Kopfes über eine erste gerundete Kante in die der Spitze zugewandte Kontaktfläche des Kopfes übergeht und die erste Seite über eine zweite gerundete Kante in die erste Seitenwand übergeht und die erste gerundete Kante über einen Bogenabschnitt in die zweite gerundete Kante übergeht, kann das Verletzungsrisiko der beiden zu verbindenden Elemente stark reduziert werden.

In einer bevorzugten Ausführungsform ist die Seitenfläche des Kopfes fluchtend mit der ersten Seite.

In einer bevorzugten Ausführungsform erstreckt sich die gerundete Kante, über die die erste Seite in die erste Seitenwand übergeht in eine Richtung parallel zur Längsachse (Schaftachse) des Clips, während die gerundete Kante, mit der die Seitenfläche des Kopfes in die der Spitze zugewandte Kontaktfläche des Kopfes übergeht sich in eine Richtung erstreckt, die sich in einem Winkel, insbesondere bevorzugt senkrecht zu der Richtung ist, in der sich die gerundete Kante erstreckt, mit der die erste Seite in die erste Seitenwand übergeht. Die gerundete Kante ist insbesondere bevorzugt in einem Querschnitt senkrecht zu der Linie, in die sich die Kante erstreckt, bogenförmig ausgeführt.

Insbesondere bevorzugt ist der Bogenabschnitt, mit dem die erste gerundete Kante in die zweite gerundete Kante übergeht nach Art einer Kehle ausgeführt.

In einer bevorzugten Ausführungsform geht die der Spitze zugewandte Kontaktfläche des Kopfes über einen Bogenabschnitt in die erste Seitenwand über.

Der erfindungsgemäße Clip wird insbesondere bevorzugt zum Befestigen eines Elements (dem zweiten Element) an einem Karosserieteil (dem erstes Element) eines Fahrzeugs, insbesondere bevorzugt an Rahmen eines Fahrzeugs verwendet. Insbesondere bevorzugt wird der Clip zum Befestigen eines Paneels (zweites Element) an dem Rahmen eines Fahrzeugs (erstes Element) verwendet. Besonders bevorzugt wird der Clip zum Befestigen eines Airbags an einem Karosserieteil, insbesondere bevorzugt eines Rahmens eines Fahrzeugs verwendet.

Die erfindungsgemäße Vorrichtung weist ein erstes Element und ein an dem ersten Element befestigtes zweites Element auf, wobei das erste Element ein Loch aufweist und das zweite Element mittels eines erfindungsgemäßen Clips an dem ersten Element befestigt ist, wobei der Clips das Loch derart durchgreift, dass der Kopf des Clips auf einer Seite des ersten Elements und die Spitze des Clips auf der gegenüberliegenden Seite des Elements angeordnet ist. In einer bevorzugten Ausführungsform durchgreift der Clips das Loch derart, dass der Kopf des Clips auf einer Seite des ersten Elements und eine Clipsfläche des Clips auf der gegenüberliegenden Seite des Elements angeordnet ist. In einer bevorzugten Ausführungsform ist das erste Element ein Karosserieteil eines Fahrzeugs, vorzugsweise ein Rahmen eines Fahrzeugs. In einer bevorzugten Ausführungsform ist das zweite Element ein Paneel oder ein Airbag.

Nachfolgend wird die Erfindung anhand von Ausführungsbeispiele der Erfindung näher darstellenden Zeichnungen erläutert. Darin zeigen
- Fig. 1:: eine perspektivische Seitenansicht von schräg unten auf einen erfindungsgemäßen Clip;
- Fig. 2:: eine perspektivische Ansicht von unten auf die Spitze des erfindungsgemäßen Clips gemäß Fig. 1;
- Fig. 3:: eine geschnittene, perspektivische Seitenansicht des erfindungsgemäßen Clips gemäß Fig. 1;
- Fig. 4:: eine perspektivische Seitenansicht von schräg oben auf einen erfindungsgemäßen Clip gemäß einer weiteren Ausführungsform;
- Fig. 5:: eine perspektivische Seitenansicht von schräg unten auf einen erfindungsgemäßen Clip gemäß einer weiteren Ausführungsform;
- Fig. 6:: eine teilweise geschnittene perspektivische Seitenansichten von schräg oben auf einen erfindungsgemäßen Clip gemäß einer weiteren Ausführungsform;
- Fig. 7:: eine teilweise geschnittene perspektivische Seitenansichten von schräg oben auf den erfindungsgemäßen Clip gemäß Fig. 6 in einem anderen Ausschnitt;
- Fig. 8:: eine perspektivische Seitenansichten von schräg oben auf den oberen Teil eines erfindungsgemäßen Clip gemäß einer weiteren Ausführungsform; und
- Fig. 9:: eine teilweise geschnittene perspektivische Seitenansichten von schräg oben auf den erfindungsgemäßen Clip gemäß Fig. 8 in einem anderen Ausschnitt.

Der in den Fig. dargestellte Clip zum Befestigen eines ersten Elements an einem zweiten Element weist einen Kopf 1 und eine Spitze 2 auf. Zwischen dem Kopf 1 und der Spitze 2 erstreckt sich ein aus mehreren Teilabschnitten zusammengesetzter Schaft 3.

Der Schaft 3 weist eine erste Seite 4 und eine der ersten Seite 4 bezogen auf eine Längsachse A des Clips gegenüberliegend angeordnete und parallel zur ersten Seite 4 verlaufende zweite Seite 5 auf. Sowohl die erste Seite 4 als auch die zweite Seite 5 erstrecken sich von dem Kopf 1 in Richtung auf die Spitze 2. Die erste Seite 4 endet in einem bogenförmigen Biegeabschnitt 6, der ausgehend von der ersten Seite 4 nach innen gebogen ist. Der Scheitel des Bogens des Biegeabschnitts 6 bildet einen Teil der Spitze 2. Die zweite Seite 5 endet in einem bogenförmigen Biegeabschnitt 7, der nach innen gebogen ist. Der Scheitel des Bogens des Biegeabschnitts 7 bildet einen Teil der Spitze 2 des Clips.

Die erste Seite 4 geht über eine Kante 8 in den flachen Grundkörper 9 einer ersten Seitenwand 10 über, die sich von der ersten Seite 4 in Richtung auf die zweite Seite 5 erstreckt. Die zweite Seite 5 geht über eine Kante 11 in den flachen Grundkörper 12 einer zweiten Seitenwand 13 über, die sich von der zweiten Seite 5 in Richtung auf die erste Seite 4 erstreckt.

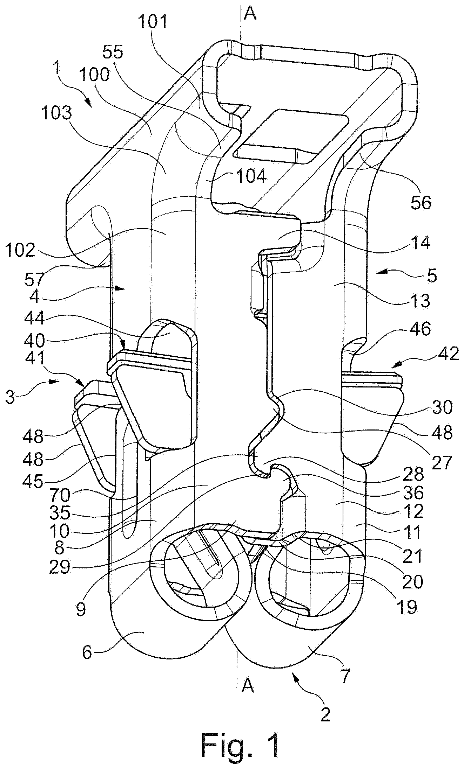

Der in den Fig. 1 bis 3 dargestellte Clip ist bezüglich einer Ebene, die die Längsachse A enthält und parallel zum Grundkörper 9 und zum Grundkörper 12 verläuft spiegelsymmetrisch aufgebaut. Von der Seite 4 erstreckt sich somit eine (in der Fig. 1 nicht dargestellte) dritte Seitenwand 50 in Richtung auf die zweite Seite 5, wobei die dritte Seitenwand 50 entsprechend der ersten Seitenwand 10 ausgeführt ist. Ferner erstreckt sich von der zweiten Seite 5 eine in der Fig. 1 nicht dargestellte vierte Seitenwand 51 in Richtung auf die erste Seite 4, wobei die vierte Seitenwand 51 entsprechend der zweiten Seitenwand 13 ausgeführt ist. Der erfindungsgemäße Clip in der in den Fig. dargestellten Ausführungsform ist ein einstückiges Element und wurde durch Biegen von Abschnitten eines Metallabschnitts erzeugt.

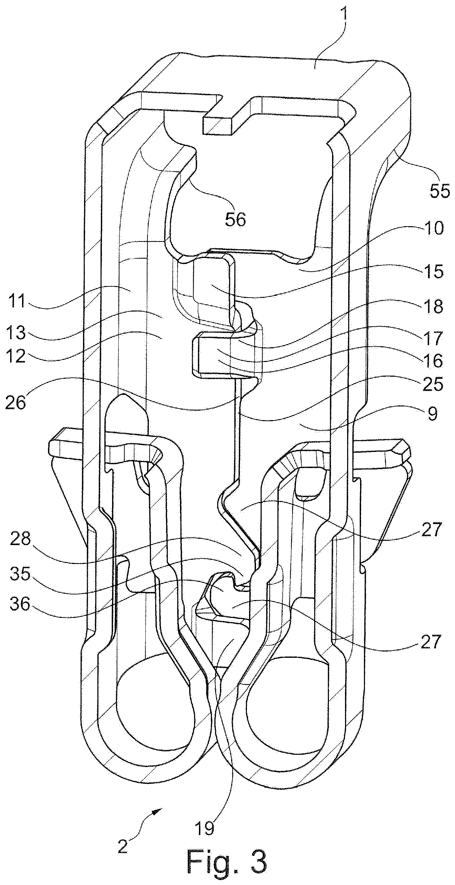

Die erste Seitenwand weist einen ersten vorstehenden Finger 14 auf, der über einen Bereich der zweiten Seitenwand 13 überlappt. Hierzu weist die zweite Seitenwand 13 die in Fig. 3 besser ersichtliche Aufnahme in Form einer Eindellung 15 auf. Ferner weist die erste Seitenwand 10 einen zweiten vorstehenden Finger 16 auf (vgl. Fig. 3). Dieser zweite vorstehende Finger 16 der ersten Seitenwand 10 überlappt einen anderen Bereich der zweiten Seitenwand 13. Dabei ist der erste vorstehende Finger 14 der ersten Seitenwand fluchtend mit dem flachen Grundkörper 9 der ersten Seitenwand ausgeführt, während der zweite vorstehende Finger 16 nach innen gebogen ist und die zweite Seitenwand 13 hintergreift. Dazu weist der zweite Finger 16 einen zwischen dem flachen Grundkörper 9 und dem Endabschnitt 17 des zweiten Fingers 16 vorgesehenen Biegeabschnitt 18 auf, der zunächst nach innen gebogen und dann in die entgegengesetzte Richtung gebogen ist, so dass der Endabschnitt 17 des Fingers 16 parallel zum Grundkörper 12 der zweiten Seitenwand 13 verläuft. Die zweite Seitenwand 13 weist einen vorstehenden Finger 19 auf, der über einen Bereich der ersten Seitenwand 10 überlappt. Der vorspringende Finger 19 der zweiten Seitenwand 13 ist vergleichbar dem zweiten vorstehenden Finger 16 in der ersten Seitenwand ausgebildet und weist einen Endabschnitt 20 auf, der parallel zum Grundkörper 9 der ersten Seitenwand verläuft sowie einen Biegeabschnitt 21, der zwischen dem Grundkörper 12 der zweiten Seitenwand 13 und dem Endabschnitt 20 vorgesehen ist.

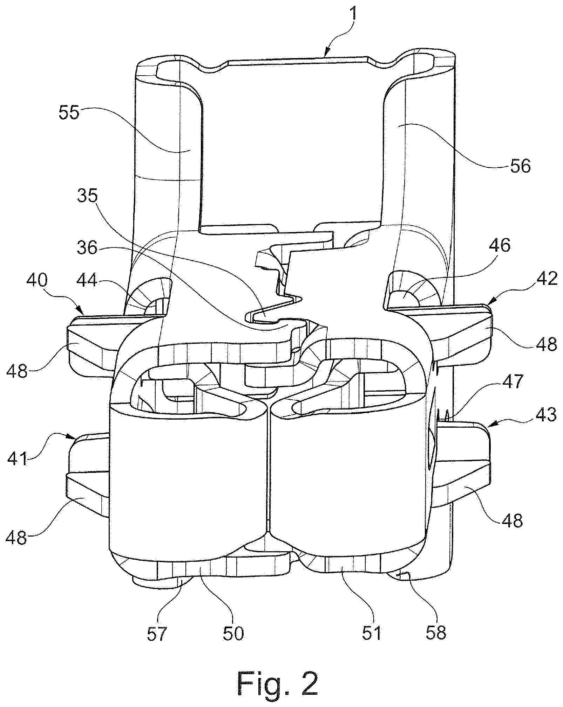

Der Grundkörper 9 der ersten Seitenwand 10 weist eine Schmalseite 25 auf. Der Grundkörper 12 der zweiten Seitenwand 13 weist eine Schmalseite 26 auf. Die Schmalseite 25 und die Schmalseite 26 sind über einen ersten Abschnitt eben ausgeführt und verlaufen in diesem Abschnitt im Wesentlichen parallel zueinander, wobei der ebene Abschnitt der Schmalseite 26 der zweiten Seitenwand 13 länger ist als der ebene Abschnitt der Schmalseite 25 der ersten Seitenwand 10. Der zweite vorstehende Finger 16 überlappt über einen Bereich des Grundkörpers 12 der zweiten Seitenwand 13, der an den ebenen Abschnitt der Schmalseite 26 der zweiten Seitenwand angrenzt. In dem Bereich, in dem der zweite vorstehende Finger 16 den Grundkörper 12 der zweiten Seitenwand 13 hintergreift weist diese einen ebenen Abschnitt der Schmalseite 26 auf. Wie in den Fig. 1 und 2 besonders gut ersichtlich schließt sich an den ebenen Abschnitt der Schmalseite 25 und an den ebenen Abschnitt der Schmalseite 26 ein Profil aus Vorsprüngen 27, 28 und Ausnehmungen 29, 30 an. Hier greift der jeweilige Vorsprung 27, 28 der jeweiligen Seitenwand 10, 13 in eine Ausnehmung 30, 29 der gegenüberliegenden Seitenwand 13, 10 ein. Die Vorsprünge 27, 28 sind derart ausgeführt, dass sie nicht mit einem Bereich der gegenüberliegenden Seitenwand überlappen, sondern lediglich in dort vorgesehene Ausnehmungen 29, 30 eingreifen. Mit dem Vorsprung 28 ist ein Rastvorsprung 35 ausgebildet, wobei mit der Ausnehmung 29 eine Rastaufnahme 36 ausgebildet ist. Rastvorsprung 35 und Rastaufnahme 36 bilden einen Verschluss, bei dem der Rastvorsprung 35 die Rastaufnahme (36) hintergreifen kann.

In dem in den Fig. 1 bis 3 dargestellten Ausführungsbeispiel weisen die erste Seite 4 und die zweite Seite 5 jeweils einen flachen Grundkörper auf. In der Fig. 1 ist zu erkennen, dass der ansonsten flache Grundkörper 4 eine kleine Erhebung 70 aufweist. Dies verdeutlicht dass im Rahmen dieser Beschreibung verwendete Verständnis des Begriffs "flacher Grundkörper", das nur in einer besonders bevorzugten Ausführungsform einen geometrisch exakt flachen Grundkörper vorsieht, aber in anderen Ausführungsformen - wie hier - auch solche Grundkörper als "flache Grundkörper" bezeichnet, die aufgrund kleiner Vorsprünge von einer geometrisch exakt flachen Form abweichen.

Bei dem in den Fig. 1 bis 3 dargestellten Ausführungsbeispiel steht der flache Grundkörper der ersten Seite 4 in einem Winkel von 90 Grad zum flachen Grundkörper 9 der ersten Seitenwand 10. Der flache Grundkörper der zweiten Seite 5 steht in einem Winkel von 90 Grad zum flachen Grundkörper 12 der zweiten Seitenwand 13. Die erste Seitenwand 10 und die zweite Seitenwand 13 sind fluchtend zueinander ausgeführt (ihre nach außen weisenden Oberflächen befinden sich in einer Ebene). Die in den Fig. dargestellte Ausführungsform weist vier Clipsflächen 40, 41, 42, 43 auf. Die jeweilige Clipsfläche ist Teil eines flexiblen Elements das jeweils durch eine Ausnehmung 44, 45, 46, 47, die sich im jeweiligen Übergang zwischen der Seite 4, 5 und der ersten Seitenfläche 10, der zweiten Seitenfläche 13, der dritten Seitenfläche 50 und der vierten Seitenfläche 51 befindet, hindurch tritt. Das jeweilige elastische Element weist eine Abschrägung 48 auf, die bewirkt, dass das fehlende Element, wenn der Clip in ein Loch eines Elements eingeführt wird, mit dem Rand des Lochs in Kontakt kommt und durch das weitere Einschieben des Clips entgegen der Federkraft nach innen gedrückt wird, aber nach Durchschreiten des Lochs in dem Element aufgrund der Federkraft wieder nach außen federt und dadurch das entsprechende Element hintergreift.

Die Clipsflächen 40, 41, 42, 43 sind dem Kopf 1 zugewandt. Der Kopf weist vier Kopfflächen 55, 56, 57, 58 auf, die den Clipsflächen 40, 41, 42, 43 zugewandt sind. Das erste Element und das zweite Element werden zwischen den Clipsflächen 40, 41, 42, 43 und den Kopfflächen 50, 56, 57, 58 gehalten und dadurch das zweite Element an dem ersten Element befestigt.

Der Kopf 1 weist eine Seitenfläche 100 auf und die der Spitze 2 zugewandte Kontaktfläche (Kopffläche) 55, wobei die Seitenfläche 100 des Kopfes über eine erste gerundete Kante 101 in die der Spitze 2 zugewandte Kontaktfläche 55 des Kopfes übergeht und die erste Seite 3 über eine zweite gerundete Kante 102 in die erste Seitenwand 10 übergeht und die erste gerundete Kante 101 über einen Bogenabschnitt 103 in die zweite gerundete Kante 102 übergeht. Die der Spitze 2 zugewandte Kontaktfläche 55 des Kopfes 1 geht über einen Bogenabschnitt 104 in die erste Seitenwand 10 über.

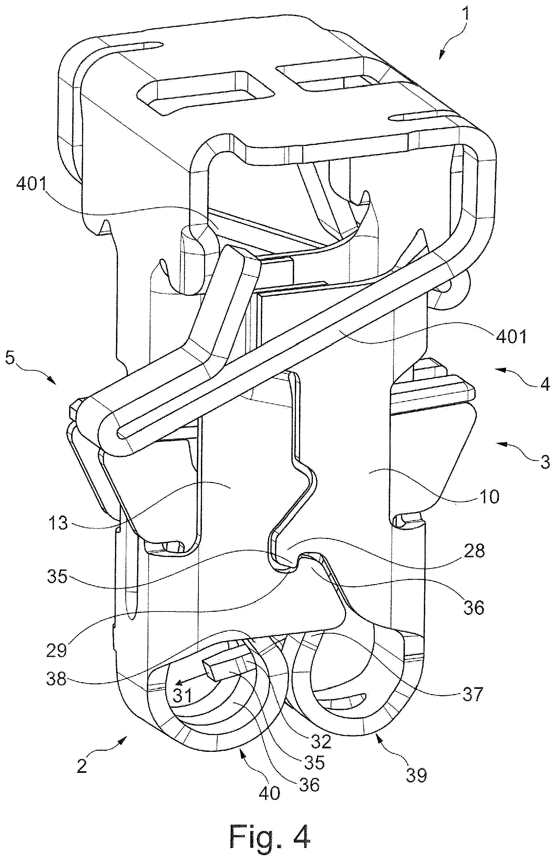

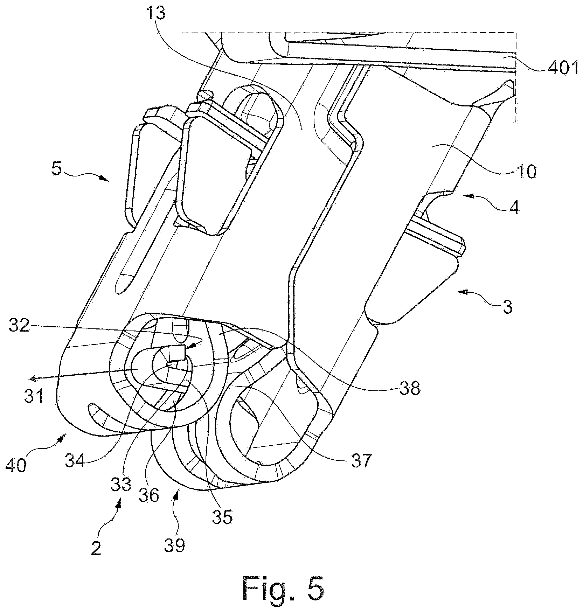

Fig. 4 zeigt eine perspektivische Seitenansicht von schräg oben auf einen erfindungsgemäßen Clip gemäß einer weiteren Ausführungsform mit zusätzlichen funktionalen Ausbildungen im Vergleich zu den vorherigen Ausführungsformen. Im Bereich des Kopfes 1 weist dieser Clip einen zu den Seitenwänden 10,13 im Wesentlichen parallelen Arm 401 mit umgebogenen Haken auf, welcher schräg zur Längsachse des Clips absteht und welcher den Kopf 1 nach Montage an einem Element stabilisiert und festhält und der über die Ausdehnungen des restlichen Clips hinausragt. Das Ausführungsbeispiel der Fig. 5 zeigt eine vergleichbare Ausführung des Kopfs 1.

Die Spitze 2 der Ausführungsformen gemäß den Flg. 4 bis 6 ist zweiteilig ausgeführt und durch einen die erste Seite 4 fortsetzenden, nach innen umgebogenen ersten Bandabschnitt 39 und einen die zweite Seite 5 fortsetzenden, nach innen umgebogenen zweiten Bandabschnitt 40 gebildet wird, wobei sich der erste Bandabschnitt 39 mit einem ersten Innenabschnitt 37 von der Spitze in Richtung auf den Kopf 1 hin fortsetzt und wobei sich der zweite Bandabschnitt 40 mit einem zweiten Innenabschnitt 38 von der Spitze 2 in Richtung auf den Kopf 1 hin fortsetzt.

Bei der Ausführungsform gemäß Fig. 4 ist zusätzlich zu dem zwischen der ersten Seitenwand 10 und der zweiten Seitenwand 13 vorgesehenen Verschluss ferner im Bereich der Spitze 2 ein Dorn vorhanden, der eine seitliche Bewegung der beiden Seiten zueinander verhindert.

Fig. 5 zeigt eine perspektivische Seitenansicht von schräg unten auf die Spitze eines erfindungsgemäßen Clips gemäß einer weiteren Ausführungsform mit zusätzlichen, anderen funktionalen Ausbildungen im Vergleich zu den vorherigen Ausführungsformen. Im Bereich der Spitze 2, welche jeweils von einem Umbiegeabschnitt bzw. ersten Bandabschnitt 39 respektive zweiten Bandabschnitt 40 gebildet wird, ist ein zusätzlicher Verschluss mit einem Rastvorsprung 35 und einer Rastaufnahme 36 vorhanden, wobei der Rastvorsprung 35 in die Rastrichtung 31 vorspringt und die Rastoberfläche 32 in einer Ebene angeordnet ist, die nicht parallel zur ersten Seitenwand 10 und oder nicht parallel zur zweiten Seitenwand 13 verläuft, und eine Rastaufnahme 36, die eine Kante 34 und eine sich an die Kante 34 anschließende Gegenfläche 33 aufweist, wobei der sich in Rastrichtung 31 vorspringende Rastvorsprung 35 über die Kante 34 ragt, so dass die Rastoberfläche 32 der Gegenfläche 33 zugewandt ist.

Der Rastvorsprung 35 ist in Form eines von dem ersten Innenabschnitt 37 in Richtung des gegenüberliegenden zweiten Innenabschnitts 38 abstehenden Arms mit einem Haken in Form einer umgebogenen Spitze am Ende ausgebildet, welcher die längliche Ausnehmung in Form eines Langlochs im Bereich des zweiten Innenabschnitts 38 hintergreift.

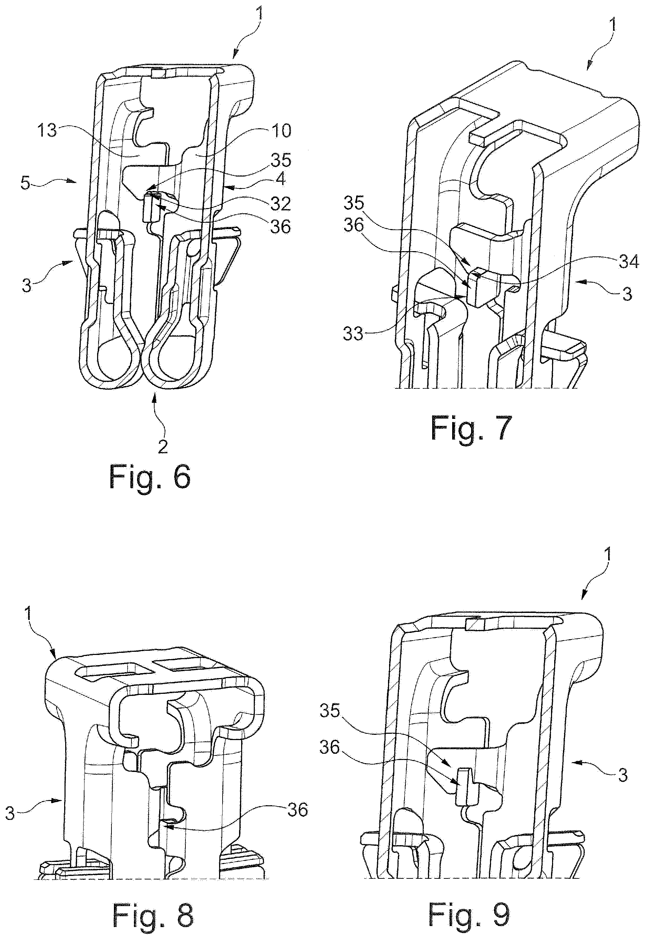

Fig. 6 und 7 zeigen einen erfindungsgemäßen Clip gemäß einer weiteren Ausführungsform mit zusätzlichen funktionalen Ausbildungen im Vergleich zu den vorherigen Ausführungsformen. Von der ersten Seitenwand 10 vorspringend ist ein Rastvorsprung 35 gezeigt, welche mit einer durch einen um ca. 90 Grad umgebogenen Vorsprung gebildete Rastaufnahme 36 der gegenüberliegenden, zweiten Seitenwand 13 zusammenwirkt. Hierdurch kann das funktional zusammenwirkende Elementepaar aus Rastvorsprung 35 und Rastaufnahme 36 sogar die Bewegung der Seitenwände 10,13 entlang der Längsachse des Clips verringern.

In Fig. 8,9 ist eine zu Fig. 6,7 vergleichbare Ausführungsform gezeigt, wobei am Ende der Rastaufnahme 36 ein Haken vorgesehen ist, der verhindert, dass der Rastvorsprung 35 von der Rastaufnahme 36 rutscht.

## Patentansprüche

1. Clip zum Befestigen eines ersten Elements an einem zweiten Element, wobei der Clip
• einen Kopf (1) und eine Spitze (2) und
• eine erste Seite (4) und eine zweite Seite (5) aufweist, wobei sich die erste Seite (4) von dem Kopf (1) in Richtung auf die Spitze (2) erstreckt und die zweite Seite (5) sich von dem Kopf (1) in Richtung auf die Spitze (2) erstreckt,
• wobei sich eine erste Seitenwand (10) von der ersten Seite (4) in Richtung auf die zweite Seite (5) erstreckt und sich eine zweite Seitenwand (13) von der zweiten Seite (5) in Richtung auf die erste Seite (4) erstreckt,
**gekennzeichnet durch,**
einen in eine Rastrichtung (31) vorspringenden Rastvorsprung (35), der eine entgegen der Rastrichtung (31) gewandte Rastoberfläche (32) aufweist, wobei die Rastoberfläche (32) in einer Ebene angeordnet ist, die nicht parallel zur ersten Seitenwand (10) und/oder nicht parallel zur zweiten Seitenwand (13) verläuft, und eine Rastaufnahme (36), die eine Kante (34) und eine an die Kante (34) anschließende Gegenfläche (33) aufweist, wobei der sich in Rastrichtung (31) vorspringende Rastvorsprung (35) über die Kante (34) ragt, so dass die Rastoberfläche (32) der Gegenfläche (33) zugewandt ist.

2. Clip nach Anspruch 1, **dadurch gekennzeichnet, dass** die Rastoberfläche (32) in einer Ebene angeordnet ist, die senkrecht zur ersten Seitenwand (10) und/oder senkrecht zur zweiten Seitenwand (13) verläuft.

3. Clip nach einem der Ansprüche 1 oder 2, **dadurch gekennzeichnet, dass** die Spitze (2) zweiteilig ausgeführt ist und durch einen die erste Seite (4) fortsetzenden, nach innen umgebogenen ersten Bandabschnitt (39) und einen die zweite Seite (5) fortsetzenden, nach innen umgebogenen zweiten Bandabschnitt (40) gebildet wird, wobei sich der erste Bandabschnitt (39) mit einem ersten Innenabschnitt (37) von der Spitze in Richtung auf den Kopf (1) hin fortsetzt und wobei sich der zweite Bandabschnitt (40) mit einem zweiten Innenabschnitt (38) von der Spitze (2) in Richtung auf den Kopf (1) hin fortsetzt und wobei der Rastvorsprung von dem ersten Innenabschnitt (37) vorspringt und die Rastaufnahme (36) als Teil des zweiten Innenabschnitts (38) ausgebildet ist.

4. Clip nach einem der Ansprüche 1 bis 3, **dadurch gekennzeichnet, dass** der Rastvorsprung (35) von der ersten Seitenwand (10) vorspringt und dass die Rastaufnahme (36) als Teil der zweiten Seitenwand (10) oder durch ein von der zweiten Seitenwand (13) nach innen vorspringenden Abschnitt gebildet wird.

5. Clip nach Anspruch 4, **dadurch gekennzeichnet, dass** die Rastaufnahme (36) als Teil einer an der Seitenwand (13, 10) ausgeführten Ausnehmung (29, 30) ausgebildet ist.

6. Clip nach Anspruch einem der Ansprüche 1 bis 5, **dadurch gekennzeichnet, dass** jeweils gegenüberliegende Seitenwände (10, 13) ein Profil aus Vorsprüngen (27, 28) und Ausnehmungen (29, 30) aufweisen, welche komplementär zueinander geformt sind.

7. Clip nach einem der Ansprüche 1 bis 6, **dadurch gekennzeichnet, dass** durch das Zusammenwirken des Rastvorsprungs (35) mit der Rastaufnahme (36) ein Verschluss aus gebildet wird, der ein Spreizen der Seiten (4, 5) verhindert.

8. Clip nach einem der Ansprüche 1 bis 7, **dadurch gekennzeichnet, dass** die erste Seitenwand (10) und/oder die zweite Seitenwand (13) einen oder mehrere vorstehende Finger (14, 16) aufweisen, die über einen Bereich der jeweils gegenüberliegenden Seitenwand (13, 10) überlappen.

9. Clip nach einem der Ansprüche 1 bis 8, **dadurch gekennzeichnet, dass** die erste Seitenwand (10) einen flachen Grundkörper (9) hat, wobei eine Schmalseite (25) des Grundkörpers (9) der ersten Seitenwand (10) der zweiten Seitenwand (13) zugewandt ist, und dass die zweite Seitenwand (13) einen flachen Grundkörper (12) hat, wobei eine Schmalseite (26) des Grundkörpers (12) der zweiten Seitenwand (13) der ersten Seitenwand (10) zugewandt ist, wobei die Schmalseite (25) der ersten Seitenwand (10) und/oder die Schmalseite (26) der zweiten Seitenwand (13) zumindest abschnittweise eben sind.

10. Clip nach einem der Ansprüche 1 bis 9, **dadurch gekennzeichnet, dass** ein Bogen (6) an einem Ende der ersten Seite (4) vorgesehen ist, wobei der Scheitel des Bogens (6) am Ende der ersten Seite (4) einen Teil der Spitze (2) des Clips ausbildet und/oder dass ein Bogen (7) an einem Ende der zweiten Seite (5) vorgesehen ist, wobei der Scheitel des Bogens (7) am Ende der zweiten Seite (5) einen Teil der Spitze (2) des Clips ausbildet

11. Clip nach einem der Ansprüche 1 bis 10, **dadurch gekennzeichnet, dass** die erste Seite (4) einen flachen Grundkörper hat, der sich von dem Kopf (1) in Richtung auf die Spitze (2) erstreckt, und die erste Seitenwand (10) einen flachen Grundkörper (9) hat, der in einem Winkel zum flachen Grundkörper der ersten Seite (4) steht, und/oder die zweite Seite (5) einen flachen Grundkörper hat, der sich von dem Kopf (1) in Richtung auf die Spitze (2) erstreckt, und die zweite Seitenwand (13) einen flachen Grundkörper (12) hat, der in einem Winkel zum flachen Grundkörper der zweiten Seite (5) steht.

12. Clip nach Anspruch 11, **dadurch gekennzeichnet, dass** der flache Grundkörper der ersten Seite (4) parallel zum flachen Grundkörper der zweiten Seite (5) ausgerichtet ist.

13. Clip nach einem der Ansprüche 1 bis 12, **gekennzeichnet durch** eine Clipsfläche (40, 41), die von der ersten Seite (4) vorsteht und die von dem Kopf (1) beabstandet ist und die dem Kopf (1) zugewandt ist.

14. Clip nach Anspruch 13, **gekennzeichnet durch** eine Kopffläche (55, 57), die der Clipsfläche (40, 41) zugewandt ist.

15. Clip nach einem der Ansprüche 1 bis 14, **dadurch gekennzeichnet, dass** der Kopf (1) und die erste Seite (4) und die erste Seitenwand (10) und die zweite Seite (5) und die zweite Seitenwand (13) alle Teil eines einstückigen Elements sind, die durch das Biegen von Abschnitten eines Metallabschnitts erzeugt wurden.

16. Vorrichtung mit einem ersten Element und einem an dem ersten Element befestigten zweiten Element, wobei das erste Element eine Öffnung aufweist und das zweite Element mittels eines Clips nach einem der Ansprüche 1 bis 15 an dem ersten Element befestigt ist, wobei der Clips die Öffnung derart durchgreift, dass der Kopf (1) des Clips auf einer Seite des ersten Elements und die Spitze (2) des Clips auf der gegenüberliegenden Seite des ersten Elements angeordnet ist.

## Claims

1. Clip for fitting a first element to a second element, wherein the clip
• has a head (1) and a tip (2) and
• a first side (4) and a second side (5), wherein the first side (4) extends from the head (1) in a direction towards the tip (2) and the second side (5) extends from the head (1) in the direction of the tip (2),
• wherein a first side wall (10) extends from the first side (4) in the direction of the second side (5) and a second side wall (13) extends from the second side (5) in the direction of the first side (4),
**characterised by**
an arresting protrusion (35) protruding in an arresting direction (31), which has an arresting surface (32) facing against the arresting direction (31), wherein the arresting surface (32) is arranged at a level that is not parallel to the first side wall (10) and/or does not extend parallel to the second side wall (13), and an arresting holder (36) that has an edge (34) and a counter-surface (33) following on from the edge (34), wherein the arresting protrusion (35) protruding in arresting direction (31) protrudes further than the edge (34), so that the arresting surface (32) faces the counter-surface (33).

2. Clip according to claim 1, **characterised in that** the arresting surface (32) is arranged at a level that runs vertical to the first side wall (10) and/or vertical to the second side wall (13).

3. Clip according to one of the claims 1 or 2, **characterised in that** the tip (2) is designed of two parts and is formed by a first tape section (39) continuing the first side (4) and bent inwards, and a second tape section (40) continuing the second side (5) and bent inwards, wherein the first tape section (39) continues with a first inner section (37) from the tip in the direction of the head (1), and wherein the second tape section (40) continues with a second inner section (38) from the tip (2) in the direction of the head (1), and wherein the arresting protrusion protrudes from the first inner section (37) and the arresting holder (36) is formed as part of the second inner section (38).

4. Clip according to one of the claims 1 to 3, **characterised in that** the arresting protrusion (35) protrudes from the first side wall (10) and that the arresting holder (36) is formed as part of the second side wall (10) or as a section protruding inwards from the second side wall (13).

5. Clip according to claim 4, **characterised in that** the arresting holder (36) is formed as part of a recess (29, 30) designed as part of the side wall (13, 10).

6. Clip according to one of the claims 1 to 5, **characterised in that** respective opposing side walls (10, 13) have a profile consisting of protrusions (27, 28) and recesses (29, 30), which are formed to complement each other.

7. Clip according to one of the claims 1 to 6, **characterised in that** the cooperation of the arresting protrusion (35) with the arresting holder (36) forms a closure that prevents a spreading of the sides (4, 5).

8. Clip according to one of the claims 1 to 7, **characterised in that** the first side wall (10) and/or the second side wall (13) have one or more protruding fingers (14, 16) that overlap an area of the respective opposite side wall (13, 10).

9. Clip according to one of the claims 1 to 8, **characterised in that** the first side wall (10) has a flat base body (9), wherein a narrow side (25) of the base body (9) of the first side wall (10) faces the second side wall (13), and that the second side wall (13) has a flat base body (12), wherein a narrow side (26) of the base body (12) of the second side wall (13) faces the first side wall (10), wherein the narrow side (25) of the first side wall (10) and/or the narrow side (26) of the second side wall (13) are level at least in some sections.

10. Clip according to one of the claims 1 to 9, **characterised in that** an arc (6) is envisaged at one end of the first side (4), wherein the ridge of the arc (6) forms part of the tip (2) of the clip at the end of the first side (4) and/or that an arc (7) is envisaged at one end of the second side (5), wherein the ridge of the arc (7) forms part of the tip (2) of the clip at the end of the second side (5).

11. Clip according to one of the claims 1 to 10, **characterised in that** the first side (4) has a flat base body that extends from the head (1) in the direction of the tip (2), and the first side wall (10) has a flat base body (9) that stands at an angle to the flat base body of the first side (4) and/or that the second side (5) has a flat base body that extends from the head (1) in the direction of the tip (2), and that the second side wall (13) has a flat base body (12) that stands at an angle to the flat base body of the second side (5).

12. Clip according to claim 11, **characterised in that** the flat base body of the first side (4) is aligned parallel to the flat base body of the second side (5).

13. Clip according to one of the claims 1 to 12, **characterised by** a clip surface (40, 41) that protrudes from the first side (4) at a distance from the head (1) and faces the head (1).

14. Clip according to claim 13, **characterised by** a head surface (55, 57) that faces the clip surface (40, 41).

15. Clip according to one of the claims 1 to 14, **characterised in that** the head (1) and the first side (4) and the first side wall (10) and the second side (5) and the second side wall (13) are all part of a single-piece element produced through bending sections of a metal section.

16. Device with a first element and a second element fitted to the first element, wherein the first element has an opening and the second element is fitted to the first element by means of a clip according to one of the claims 1 to 15, wherein the clip penetrates the opening in such a way that the head (1) of the clip is arranged on one side of the first element and the tip (2) of the clip on the opposite side of the first element.

## Revendications

1. Clip pour fixer un premier élément à un deuxième élément, le clip présentant
• une tête (1) et une pointe (2) et
• une première face (4) et une deuxième face (5), la première face (4) s'étendant de la tête (1) en direction de la pointe (2) et la deuxième face (5) s'étendant de la tête (1) en direction de la pointe (2),
• une première paroi latérale (10) s'étendant de la première face (4) en direction de la deuxième face (5) et une deuxième paroi latérale (13) s'étendant de la deuxième face (5) en direction de la première face (4),
**caractérisé en** une saillie de blocage (35) se mettant en prise dans une direction d'encliquetage (31) qui présente une surface de verrouillage (32) à l'opposé de la direction d'encliquetage (31), la surface de verrouillage (32) étant disposée dans un plan n'étant pas parallèle à la première paroi latérale (10) et/ou n'étant pas parallèle à la deuxième paroi latérale (13), et un logement de verrouillage (36) qui présente une arête (34) et une surface antagoniste (33) jointe à l'arête (34), la saillie de blocage (35) se mettant en prise dans la direction d'encliquetage (31) fait saillie sur l'arête (34) de sorte que la surface de verrouillage (32) est orienté vers la surface antagoniste (33).

2. Clip selon la revendication 1, **caractérisé en ce que** la surface de verrouillage (32) est disposée dans un plan qui est perpendiculaire à la première paroi latérale (10) et/ou perpendiculaire à la deuxième paroi latérale (13).

3. Clip selon l'une des revendications 1 ou 2, **caractérisé en ce que** la pointe (2) est conçue en deux pièces et formée par une première section de bande (39) recourbée vers l'intérieur prolongeant la première face (4) et par une deuxième section de bande (40) recourbée vers l'intérieur prolongeant la deuxième face (5), la première section de bande (39) se prolongeant de la pointe en direction de la tête (1) avec une première section intérieure (37) et la deuxième section de bande (40) se prolongeant de la pointe (2) en direction de la tête (1) avec une deuxième section intérieure (38) et la saillie de blocage se mettant en prise avec la première section intérieure (37) et le logement de verrouillage (36) étant formé comme un élément de la deuxième section intérieure (38).

4. Clip selon l'une quelconque des revendications 1 à 3, **caractérisé en ce que** la saillie de blocage (35) se met en prise avec la première paroi latérale (10) et **en ce que** le logement de verrouillage (36) est formé comme un élément de la deuxième paroi latérale (10) et par une section en saillie vers l'intérieur de la deuxième paroi latérale (13).

5. Clip selon la revendication 4, **caractérisé en ce que** le logement de verrouillage (36) est formé comme un élément d'un évidement (29, 30) réalisé sur la paroi latérale (13, 10).

6. Clip selon l'une quelconque des revendications 1 à 5, **caractérisé en ce que** les parois latérales (10, 13) respectivement à l'opposé l'une de l'autre présentent un profil de saillies (27, 28) et d'évidements (29, 30) qui sont formés de manière complémentaire les uns par rapport aux autres.

7. Clip selon l'une quelconque des revendications 1 à 6, **caractérisé en ce qu**'un verrouillage empêchant l'écartement des faces (4, 5) est formé grâce à l'interaction de la saillie de blocage (35) avec le logement de verrouillage (36).

8. Clip selon l'une quelconque des revendications 1 à 7, **caractérisé en ce que** la première paroi latérale (10) et/ou la deuxième paroi latérale (13) présentent un ou plusieurs doigts saillants (14, 16) qui se chevauchent sur une zone de la paroi latérale (13, 10) respectivement opposée.

9. Clip selon l'une quelconque des revendications 1 à 8, **caractérisé en ce que** la première paroi latérale (10) a un corps de base (9) plat, un côté étroit (25) du corps de base (9) de la première paroi latérale (10) étant orienté vers la deuxième paroi latérale (13), et **en ce que** la deuxième paroi latérale (13) a un corps de base (12) plat, un côté étroit (26) du corps de base (12) de la deuxième paroi latérale (13) étant orienté vers la première paroi latérale (10), le côté étroit (25) de la première paroi latérale (10) et/ou le côté étroit (26) de la deuxième paroi latérale (13) étant plans au moins par section.

10. Clip selon l'une quelconque des revendications 1 à 9, **caractérisé en ce qu'**un arc (6) est prévu à une extrémité de la première face (4), le sommet de l'arc (6) à l'extrémité de la première face (4) formant une partie de la pointe (2) du clip et/ou **en ce qu'**un arc (7) est prévu à une extrémité de la deuxième face (5), le sommet de l'arc (7) à l'extrémité de la deuxième face (5) formant une partie de la pointe (2) du clip.

11. Clip selon l'une quelconque des revendications 1 à 10, **caractérisé en ce que** la première face (4) a un corps de base plat qui s'étend de la tête (1) en direction de la pointe (2), et la première paroi latérale (10) a un corps de base (9) plat qui est dans un angle par rapport au corps de base plat de la première face (4), et/ou la deuxième face (5) a un corps de base plat qui s'étend de la tête (1) en direction de la pointe (2), et la deuxième paroi latérale (13) a un corps de base (12) plat qui est dans un angle par rapport au corps de base plat de la deuxième face (5).

12. Clip selon la revendication 11, **caractérisé en ce que** le corps de base plat de la première face (4) est orienté parallèlement au corps de base plat de la deuxième face (5).

13. Clip selon l'une quelconque des revendications 1 à 12, **caractérisé en** une surface de clip (40, 41), qui fait saillie de la première face (4), est espacée de la tête (1) et orientée vers la tête (1).

14. Clip selon la revendication 13, **caractérisé en** une surface de tête (55, 57) orientée vers la surface de clip (40, 41).

15. Clip selon l'une quelconque des revendications 1 à 14, **caractérisé en ce que** la tête (1) et la première face (4) et la première paroi latérale (10) et la deuxième face (5) et la deuxième paroi latérale (13) sont toutes une partie d'un élément en une seule pièce qui sont générées par la flexion de sections d'une section métallique.

16. Dispositif avec un premier élément et un deuxième élément fixé sur le premier élément, le premier élément présentant une ouverture et le deuxième élément étant fixé au premier élément au moyen d'un clip selon l'une quelconque des revendications 1 à 15, le clip pénétrant dans l'ouverture de telle sorte que la tête (1) du clip est disposée sur un côté du premier élément et la pointe (2) du clip sur le côté opposé du premier élément.
